# EUROPEAN PATENT SPECIFICATION

(11) **EP 4 017 898 B1**
(45) Date of publication and mention of the grant of the patent: **29.04.2026**
(21) Application number: 20747551.8
(22) Date of filing: 23.06.2020
(51) Int. Cl.: C08G 59/50, C08L 63/00, C09D 163/00, C09J 163/00, C23C 22/34, C23C 22/83, C23G 1/02

(54) **SYSTEMS AND METHODS FOR IMPROVED LAP SHEAR STRENGTH AND DISPLACEMENT OF TWO-COMPONENT STRUCTURAL ADHESIVES**
SYSTEME UND VERFAHREN FÜR VERBESSERTE SCHERFESTIGKEIT UND VERSCHIEBUNG VON ZWEIKOMPONENTEN-STRUKTURKLEBSTOFFEN
SYSTÈMES ET PROCÉDÉS POUR AMÉLIORER LA RÉSISTANCE AU CISAILLEMENT DE RECOUVREMENT ET LE DÉPLACEMENT D'ADHÉSIFS STRUCTURAUX À DEUX COMPOSANTS

(30) Priority: 23.08.2019 US 201962890854 P
(43) Date of publication of application: 29.06.2022
(73) Proprietor: PPG Industries Ohio Inc., Cleveland, OH 44111 (US)
(72) Inventor: FORTMAN, David J., Pittsburgh, Pennsylvania 15206 (US); POLLUM, JR., Marvin M., Pittsburgh, Pennsylvania 15212 (US); KRILEY, Joseph P., Valencia, Pennsylvania 16059 (US); REARICK, Brian K., Allison Park, Pennsylvania 15101 (US); FRENCH, Maria S., Canfield, Ohio 44406 (US); BROWN-TSENG, Elizabeth S., GIbsonia, Pennsylvania 15044 (US); BOWLES, Steven E., Pittsburgh, Pennsylvania 15215 (US); NAKAJIMA, Masayuki, Wexford, Pennsylvania 15090 (US)
(74) Representative: f & e patent
(86) International application number: PCT/US2020/039060
(87) International publication number: WO 2021/040865

(56) References cited:
- WO-A1-2015/013084
- WO-A2-03/093532
- US-A1- 2012 129 980
- US-A1- 2014 150 970

## Description

### FIELD OF THE INVENTION

The present invention relates to compositions, systems and methods for treating a metal substrate.

### BACKGROUND OF THE INVENTION

The use of protective coatings on metal substrates for improved corrosion resistance and paint adhesion is common. Coating compositions, including sealants and adhesives, are utilized in a wide variety of applications to treat a variety of substrates or to bond together two or more substrate materials. Structural adhesive compositions comprising an epoxy-containing compound are described in US 2012/0129980 A1 and US 2014/0150970 A1. WO 2015/013084 A1 describes curable composition comprising an epoxy resin. Conversion coatings comprising alkaline earth metal fluoride complexes are described in WO 03/093532 A2.

### SUMMARY OF THE INVENTION

Disclosed herein is a system for treating a substrate, comprising: a deoxidizing composition comprising a Group IVA metal and/or a Group IVB metal and free fluoride, wherein the deoxidizing composition has a pH of 1.0 to 3.0; and a coating composition comprising: a first component comprising an epoxy-containing compound; a second component that chemically reacts with the epoxy-containing compound, the second component comprising a diamine comprising a cyclic ring and/or a polyamine comprising a cyclic ring, and elastomeric particles wherein the cyclic ring of the diamine and/or the polyamine has at least one carbon positioned between the amino functional groups and the cyclic ring structure; and/or wherein at least 50% by weight of the elastomeric particles comprise a styrene butadiene core based on total weight of the elastomeric particles.

Also disclosed are substrates treated with a system of the present invention.

Also disclosed are protective clothing comprising a substrate treated with a system of the present invention.

Also disclosed are articles comprising a substrate treated with a system of the present invention.

Also disclosed are methods of treating a substrate with a system of the present invention.

Also disclosed herein are methods of forming an article comprising extruding the compositions of the present invention and treating the article with a system of the present invention.

### DETAILED DESCRIPTION OF THE INVENTION

For purposes of the following detailed description, it is to be understood that the invention may assume various alternative variations and step sequences, except where expressly specified to the contrary. Unless indicated to the contrary, the numerical parameters set forth in the following specification and attached claims are approximations that may vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques. Where a closed or open-ended numerical range is described herein, all numbers, values, amounts, percentages, subranges and fractions within or encompassed by the numerical range are to be considered as being specifically included in and belonging to the original disclosure of this application as if these numbers, values, amounts, percentages, subranges and fractions had been explicitly written out in their entirety.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard variation found in their respective testing measurements.

As used herein, unless indicated otherwise, a plural term can encompass its singular counterpart and vice versa, unless indicated otherwise. For example, although reference is made herein to "an" epoxy and "a" curing agent, a combination (i.e., a plurality) of these components can be used.

In addition, in this application, the use of "or" means "and/or" unless specifically stated otherwise, even though "and/or" may be explicitly used in certain instances.

As used herein, "including," "containing" and like terms are understood in the context of this application to be synonymous with "comprising" and are therefore open-ended and do not exclude the presence of additional undescribed or unrecited elements, materials, ingredients or method steps. As used herein, "consisting of' is understood in the context of this application to exclude the presence of any unspecified element, ingredient or method step. As used herein, "consisting essentially of" is understood in the context of this application to include the specified elements, materials, ingredients or method steps "and those that do not materially affect the basic and novel characteristic(s)" of what is being described.

As used herein, the terms "on," "onto," "applied on," "applied onto," "formed on," "deposited on," "deposited onto," mean formed, overlaid, deposited, or provided on but not necessarily in contact with the surface. For example, a coating composition "applied onto" a substrate does not preclude the presence of one or more other intervening coating layers of the same or different composition located between the coating composition and the substrate.

As used herein, a "salt" refers to an ionic compound made up of cations and anions and having an overall electrical charge of zero. Salts may be hydrated or anhydrous.

As used herein, "aqueous composition" refers to a solution or dispersion in a medium that comprises predominantly water. For example, the aqueous medium may comprise water in an amount of more than 50 wt.%, or more than 70 wt.% or more than 80 wt.% or more than 90 wt.% or more than 95 wt.% based on the total weight of the medium. That is, the aqueous medium may for example consist substantially of water.

As used herein, the term "dispersion" refers to a two-phase transparent, translucent or opaque system in which particles are in the dispersed phase and an aqueous medium, which includes water, is in the continuous phase.

As used herein, "deoxidizing composition" refers to a composition having a pH of no greater than 3.0 and a free fluoride content of no greater than 50 ppm based on total weight of the deoxidizing composition and that is capable of etching and/or reacting with and chemically altering the substrate surface.

As used herein, "deoxidizing composition bath" or "deoxidizing bath" refers to an aqueous bath containing the deoxidizing composition and that may contain components that are byproducts of the process.

As used herein, "conversion composition" or "pretreatment composition" refers to a composition that is capable of reacting with and chemically altering the substrate surface and binding to it to form a film that affords corrosion protection.

As used herein, "conversion composition bath" or "pretreatment bath" refers to an aqueous bath containing the conversion composition and that may contain components that are byproducts of the process.

As used herein, "seal composition" refers to a composition that is capable of depositing on a substrate surface through chemisorption or physisorption.

As used herein, "seal composition bath" or "seal bath" refers to an aqueous bath containing the seal composition and that may contain components that are byproducts of the process.

As used herein, the terms "Group IIIB metal" or "Group IIIB element" refer to an element that is in Group IIIB of the CAS version of the Periodic Table of the Elements as is shown, for example, in the Handbook of Chemistry and Physics, 63rd edition (1983), corresponding to Group 3 in the actual IUPAC numbering.

As used herein, the term "Group IIIB metal compound" refers to compounds that include at least one element that is in Group IIIB of the CAS version of the Periodic Table of the Elements.

As used herein, the terms "Group IVA metal" and "Group IVA element" refer to an element that is in group IVA of the CAS version of the Periodic Table of the Elements as is shown, for example, in the Handbook of Chemistry and Physics, 63rd edition (1983), corresponding to Group 14 in the actual IUPAC numbering.

As used herein, the term "Group IVA metal compound" refers to compounds that include at least one element that is in Group IVA of the CAS version of the Periodic Table of the Elements.

As used herein, the terms "Group IVB metal" and "Group IVB element " refer to an element that is in group IVB of the CAS version of the Periodic Table of the Elements as is shown, for example, in the Handbook of Chemistry and Physics, 63rd edition (1983), corresponding to Group 4 in the actual IUPAC numbering.

As used herein, the term "Group IVB metal compound" refers to compounds that include at least one element that is in Group IVB of the CAS version of the Periodic Table of the Elements.

As used herein, the terms "Group VB metal" and "Group VB element" refer to an element that is in group VB of the CAS version of the Periodic Table of the Elements as is shown, for example, in the Handbook of Chemistry and Physics, 63rd edition (1983), corresponding to Group 5 in the actual IUPAC numbering.

As used herein, the term "Group VB metal compound" refers to compounds that include at least one element that is in Group VB of the CAS version of the Periodic Table of the Elements.

As used herein, the terms "Group VIB metal" and "Group VIB element" refer to an element that is in group VIB of the CAS version of the Periodic Table of the Elements as is shown, for example, in the Handbook of Chemistry and Physics, 63rd edition (1983), corresponding to Group 6 in the actual IUPAC numbering.

As used herein, the term "Group VIB metal compound" refers to compounds that include at least one element that is in Group VIB of the CAS version of the Periodic Table of the Elements.

As used herein, the term "Group VIIB metal" and "Group VIIB element" refer to an element that is in group VIIB of the CAS version of the Periodic Table of the Elements as is shown, for example, in the Handbook of Chemistry and Physics, 63rd edition (1983), corresponding to Group 7 in the actual IUPAC numbering.

As used herein, the term "Group VIIB metal compound" refers to compounds that include at least one element that is in Group VIIB of the CAS version of the Periodic Table of the Elements.

As used herein, the terms "Group IIB metal" and "Group IIB element" refer to an element that is in group XIIB of the CAS version of the Periodic Table of the Elements as is shown, for example, in the Handbook of Chemistry and Physics, 63rd edition (1983), corresponding to Group 12 in the actual IUPAC numbering.

As used herein, the term "Group IIB metal compound" refers to compounds that include at least one element that is in Group IIB of the CAS version of the Periodic Table of the Elements.

As used herein, "monoamine" refers to an organic compound having one amino functional group.

As used herein, "diamine" refers to an organic compound having two amino functional groups.

As used herein, "polyamine" refers to an organic compound having more than two amino functional groups.

As used herein, "amino functional group" refers to a functional group comprising a nitrogen atom attached by a single bond to a hydrogen atom(s), an alkyl group(s), and/or an aryl group(s).

As used herein, "epoxide functional group" refers to a functional group comprising a cyclic ether with a three-atom ring.

As used herein, "amine hydrogen" refers to the number of active hydrogens directly bonded to the nitrogen atom of an amine- or other nitrogen-containing functional group. "Active hydrogens" refer to hydrogens that can be displaced when the amine- or nitrogen-containing functional group reacts as a nucleophile with an appropriate electrophile and can be determined, for example, by the Zerewitinoff test.

As used herein, a "coating composition" refers to a composition, e.g., a solution, mixture, or a dispersion, that, in an at least partially dried or cured state, is capable of producing a film, layer, or the like on at least a portion of a substrate surface.

As used herein, a "seal" or a "sealant" or compositions thereof refers to a coating composition, e.g., a solution, mixture, or a dispersion, that, in an at least partially dried or cured state, has the ability to resist atmospheric conditions and particulate matter, such as moisture and temperature and at least partially block the transmission of materials, such as particulates, water, fuel, or other liquids and gasses.

As used herein, the term "structural adhesive" means an adhesive producing a load-bearing joint having both a lap shear strength of at least 20.0 MPa, measured according to ASTM D1002-10 using 2024-T3 aluminum substrate of 1.6 mm thickness, as measured by an INSTRON 5567 machine in tensile mode with a pull rate of 1.3 mm per minute.

As defined herein, a "2K" or "two-component" coating composition refers to a composition in which at least a portion of the reactive components readily react and at least partially cure when mixed without activation from an external energy source, such as at ambient conditions. One of skill in the art understands that the two components of the adhesive composition are stored separately from each other and mixed just prior to application of the adhesive composition. As described in more detail below, the 2K adhesive compositions disclosed herein may be subjected to a curing process wherein (1) at least a portion of the first component and the second component chemically react when mixed at ambient conditions to at least partially cure the adhesive composition without activation from an external energy source, optionally followed by (2) the application of an external energy source to the adhesive composition to further cure the adhesive composition, such as a two-step curing process described herein. External energy sources that may be used to promote the curing reaction (i.e., the crosslinking of the epoxy component and the curing agent) include, for example, radiation (i.e., actinic radiation) and/or heat, such as by baking in an oven and/or forced hot air.

As further defined herein, ambient conditions generally refer to room temperature and humidity conditions or temperature and humidity conditions that are typically found in the area in which the adhesive is being applied to a substrate, e.g., at 10°C to 40°C and 5% to 80% relative humidity.

As used herein, "Mw" refers to the weight average molecular weight, for example the theoretical value as determined by Gel Permeation Chromatography using Waters 2695 separation module with a Waters 410 differential refractometer (RI detector) and polystyrene standards, tetrahydrofuran (THF) used as the eluent at a flow rate of 1 ml min⁻¹, and two PL Gel Mixed C columns used for separation.

As used herein, the term "accelerator" means a substance that increases the rate or decreases the activation energy of a chemical reaction. An accelerator may be either a "catalyst," that is, without itself undergoing any permanent chemical change, or may be reactive, that is, capable of chemical reactions and includes any level of reaction from partial to complete reaction of a reactant.

As used herein, the terms "latent" or "blocked" or "encapsulated", when used with respect to a curing agent or an accelerator, means a molecule or a compound that is activated by an external energy source prior to reacting (i.e., crosslinking) or having a catalytic effect, as the case may be. For example, an accelerator may be in the form of a solid at room temperature and have no catalytic effect until it is heated and melts or dissolves in the composition, or the latent accelerator may be reversibly reacted with a second compound that prevents any catalytic effect until the reversible reaction is reversed by the application of heat and the second compound is removed, freeing the accelerator to catalyze reactions.

As used herein, the term "curing agent" means any reactive material that can be added to a composition to accelerate curing of the composition (e.g., curing of a polymer). The term "reactive" when used with respect to the curing agent means capable of chemical reactions and includes any level of reaction from partial to complete reaction of a reactant.

As used herein, the term "cure", "cured" or similar terms, as used in connection with the composition described herein, means that at least a portion of the components that form the composition are cross-linked to form an adhesive coating, film, layer, or bond. Additionally, curing of the composition refers to subjecting said composition to curing conditions (e.g., elevated temperature, lowered activation energy through catalytic activity, etc.) leading to the reaction of the reactive functional groups of the components of the composition, and resulting in the crosslinking of the components of the composition and formation of an at least partially cured or gelled coating. As used herein, the term "at least partially cured" with respect to a coating refers to a coating formed by subjecting the composition to curing conditions such that a chemical reaction of at least a portion of the reactive groups of the components of the composition occurs to form a coating, film, layer, or bond. A coating composition may be considered to be "at least partially cured" if it has a lap shear strength of greater than 0.2 MPa measured according to ASTM D1002-10 by using an INSTRON 5567 machine in tensile mode with a pull rate of 1.3 mm per minute. As discussed in more detail below, the coating composition may also be subjected to a two-step curing process such that a substantially complete cure is attained and wherein further exposure to curing conditions results in no significant further improvement in the coating properties such as, for example, increased lap shear strength.

As used herein, unless indicated otherwise, the term "substantially free" means that a particular material is not purposefully added to a mixture or composition, respectively, and is only present as an impurity in a trace amount of less than 5% by weight based on a total weight of the mixture or composition, respectively. As used herein, unless indicated otherwise, the term "essentially free" means that a particular material is only present in an amount of less than 2% by weight based on a total weight of the mixture or composition, respectively. As used herein, unless indicated otherwise, the term "completely free" means that a mixture or composition, respectively, does not comprise a particular material, i.e., the mixture or composition comprises 0% by weight of such material.

As used herein, the term "glass transition temperature" ("Tg") refers to the temperature at which an amorphous material, such as a glass or a high molecular weight polymer, changes from a brittle vitreous state to a plastic or rubbery state or from a plastic or rubbery state to a brittle vitreous state. Tg values as used herein may be determined, for example, by the Fox Equation.

### Systems

The present invention also is directed to systems and methods for treating a substrate, comprising, or consisting essentially of, or consisting of: a deoxidizing composition comprising a Group IVA element and/or a Group IVB element and a fluoride source, wherein the deoxidizing composition has a pH of 1.0 to 3.0; and a coating composition comprising, or consisting essentially of, or consisting of, a first component, a second component, and elastomeric particles as defined in claim 1. Herein, the first component comprises, or may consist essentially of, or consist of, an epoxy-containing compound. The second component may comprise, or consist essentially of, or consist of, a diamine comprising a cyclic ring and/or a polyamine comprising a cyclic ring, wherein the cyclic ring of the diamine and/or the polyamine has at least one carbon positioned between the amino functional groups and the cyclic ring structure. The diamine and/or polyamine may chemically react with the epoxy-containing component.

Alternatively, or in addition, in the composition comprising, or consisting essentially of, or consisting of, the first component, the second component, and elastomeric particles, at least 50% by weight of the elastomeric particles may comprise, or consist essentially of, or consist of, a styrene butadiene core based on total weight of the elastomeric particles.

Any of the systems disclosed herein may comprise a cleaner composition. At least a portion of the substrate surface may be cleaned prior to contacting at least a portion of the substrate surface with the deoxidizing composition described above, in order to remove grease, dirt, and/or other extraneous matter. At least a portion of the surface of the substrate may be cleaned by physical and/or chemical means, such as mechanically abrading the surface and/or cleaning/degreasing the surface with commercially available alkaline or acidic cleaning agents that are well known to those skilled in the art. Examples of alkaline cleaners suitable for use in the present invention include Chemkleen^{™} 166HP, 166M/C, 177, 490MX, 2010LP, and Surface Prep 1 (SP1), Ultrax 32, Ultrax 97, Ultrax 29, Ultrax92D, Ultrax 14, and Ultrax 45, each of which are commercially available from PPG Industries, Inc. (Cleveland, OH), and any of the DFM Series, RECC 1001, and 88X1002 cleaners (commercially available from PRC-DeSoto International, Sylmar, CA), and Turco 4215-NCLT and Ridolene (commercially available from Henkel Technologies, Madison Heights, MI). Examples of acidic cleaners suitable for use in the present invention include Acid Metal Cleaner (AMC) 23, AMC 239, AMC 240, and AMC 533. Such cleaners are often preceded and/or followed by a water rinse, such as with tap water, distilled water, or combinations thereof. In other examples, the cleaner may comprise the homopolymer or copolymer described herein.

### Deoxidizing Composition

The system of the present invention comprises a deoxidizing composition. The deoxidizing composition comprises a Group IVA metal and/or a Group IVB metal, and free fluoride. The deoxidizing composition has a pH of 1.0 to 3.0. The deoxidizing composition may be applied as part of a system described herein.

The Group IVA metal may, for example, comprise silicon such as silanes, silicas, silicates, and the like. The Group IVA metal may be provided in the deoxidizing composition in the form of specific compounds of the metals, such as their soluble acids and/or salts. Examples of useful compounds include fluorosilicic acid, ammonium and alkali metal fluorosilicates, and the like, including by way of non-limiting example, hexafluorosilicate.

The Group IVA metal, if present at all, may be present in the deoxidizing composition in an amount of at least 10 ppm based on total weight of the deoxidizing composition, such as at least 20 ppm, such as at least 50 ppm, and, if present at all, may be present in the deoxidizing composition in an amount of no more than 1000 ppm based on total weight of the deoxidizing composition, such as no more than 500 ppm, such as no more than 250 ppm. The Group IVA metal, if present at all, may be present in the deoxidizing composition in an amount of 10 ppm to 1000 ppm based on total weight of the deoxidizing composition, such as 20 ppm to 500 ppm, such as 50 ppm to 250 ppm.

As stated above, the deoxidizing composition may comprise a Group IVB metal. Optionally, the deoxidizing composition may comprise more than one Group IVB metal. The Group IVB metal may comprise zirconium, titanium, hafnium, or combinations thereof. For example, the Group IVB metal used in the deoxidizing composition may be a compound of zirconium, titanium, hafnium, or a mixture thereof. Suitable compounds of zirconium include, but are not limited to, hexafluorozirconic acid, alkali metal and ammonium salts thereof, ammonium zirconium carbonate, zirconyl nitrate, zirconyl sulfate, zirconium carboxylates and zirconium hydroxy carboxylates, such as zirconium acetate, zirconium oxalate, ammonium zirconium glycolate, ammonium zirconium lactate, ammonium zirconium citrate, zirconium basic carbonate, zirconium tetralkaloids, and mixtures thereof. Suitable compounds of titanium include, but are not limited to, fluorotitanic acid and its salts. A suitable compound of hafnium includes, but is not limited to, hafnium nitrate.

The Group IVB metal, if present at all, may be present in the deoxidizing composition in a total amount of at least 200 ppm based on total weight of the deoxidizing composition, such as at least 250 ppm, such as at least 300 ppm. The Group IVB metal, if present at all, may be present in the deoxidizing composition in a total amount of no more than 5000 ppm based on total weight of the deoxidizing composition, such as no more than 4000 ppm, such as no more than 3500 ppm. The Group IVB metal may be present in the deoxidizing composition in a total amount of 200 ppm to 5000 ppm based on total weight of the deoxidizing composition, such as 250 ppm to 4000 ppm, such as 300 ppm to 3500 ppm.

The deoxidizing composition also may comprise a Group IA metal such as lithium. According to the invention, the source of Group IA metal in the deoxidizing composition may be in the form of a salt. Non-limiting examples of suitable lithium salts include lithium nitrate, lithium sulfate, lithium fluoride, lithium chloride, lithium hydroxide, lithium carbonate, lithium iodide, and combinations thereof.

The Group IA metal may be present in the deoxidizing composition in an amount of at least 2 ppm based on a total weight of the deoxidizing composition, such as at least 5 ppm, such as at least 25 ppm, such as at least 75 ppm, and in some instances, may be present in an amount of no more than 500 ppm based on a total weight of the deoxidizing composition, such as no more than 250 ppm, such as no more than 125 ppm, such as no more than 100 ppm. The Group IA metal may be present in the deoxidizing composition in an amount of 2 ppm to 500 ppm based on a total weight of the deoxidizing composition, such as 5 ppm to 250 ppm, such as 5 ppm to 125 ppm, such as 25 ppm to 125 ppm, such as 75 ppm to 100 ppm, such as 5 ppm to 25 ppm.

The deoxidizing composition may also comprise a Group VIB metal. In an example, the Group VIB metal may be molybdenum. According to the present invention, the source of Group VIB metal in the deoxidizing composition may be in the form of a salt. Non-limiting examples of suitable molybdenum salts include sodium molybdate, lithium molybdate, calcium molybdate, potassium molybdate, ammonium molybdate, molybdenum chloride, molybdenum acetate, molybdenum sulfamate, molybdenum formate, molybdenum lactate, and combinations thereof.

According to the present invention, the Group VIB metal may be present in the deoxidizing composition in an amount of at least 5 ppm based on a total weight of the deoxidizing composition, such as at least 25 ppm, such as 100 ppm, and in some instances, may be present in the deoxidizing composition in an amount of no more than 500 ppm based on total weight of the deoxidizing composition, such as no more than 250 ppm, such as no more than 150 ppm. According to the present invention, the Group VIB metal may be present in the deoxidizing composition in an amount of 5 ppm to 500 ppm based on total weight of the deoxidizing composition, such as 25 ppm to 250 ppm, such as 100 ppm to 150 ppm, such as 40 ppm to 120 ppm.

The deoxidizing composition may further comprise an anion that may be suitable for forming a salt with any of the Group **IA,** Group **IVA,** Group **IVB,** and Group VIB metals described above, such as a halogen, a nitrate, a sulfate, a silicate (orthosilicates and metasilicates), carbonates, hydroxides, and the like.

The deoxidizing composition also may comprise an electropositive metal. As used herein, the term "electropositive metal" refers to metal ions that will be reduced by the metal substrate being treated when the deoxidizing composition contacts the surface of the metallic substrate. As will be appreciated by one skilled in the art, the tendency of chemical species to be reduced is called the reduction potential, is expressed in volts, and is measured relative to the standard hydrogen electrode, which is arbitrarily assigned a reduction potential of zero. The reduction potential for several elements is set forth in Table 1 below (according to the CRC 82^{nd} Edition, 2001-2002). An element or ion is more easily reduced than another element or ion if it has a voltage value, E*, in the following table, that is more positive than the elements or ions to which it is being compared.

**Table 1. Reduction Potentials**

| Element | Reduction half-cell reaction | Voltage, E* |
|---|---|---|
| Potassium | K⁺ + e → K | -2.93 |
| Calcium | Ca²⁺ + 2e → Ca | -2.87 |
| Sodium | Na⁺ + e → Na | -2.71 |
| Magnesium | Mg²⁺ + 2e → Mg | -2.37 |
| Aluminum | Al³⁺ + 3e → Al | -1.66 |
| Zinc | Zn²⁺ + 2e → Zn | -0.76 |
| Iron | Fe²⁺ + 2e → Fe | -0.45 |
| Nickel | Ni²⁺ + 2e → Ni | -0.26 |
| Tin | Sn²⁺ + 2e → Sn | -0.14 |
| Lead | Pb²⁺ + 2e → Pb | -0.13 |
| Hydrogen | 2H⁺ + 2e → H₂ | -0.00 |
| Copper | Cu²⁺ + 2e → Cu | 0.34 |
| Mercury | Hg₂²⁺ + 2e → 2Hg | 0.80 |
| Silver | Ag⁺ + e → Ag | 0.80 |
| Gold | Au³⁺ + 3e → Au | 1.50 |

Thus, as will be apparent, when the metal substrate comprises one of the materials listed below, such as cold rolled steel, hot rolled steel, steel coated with zinc metal, zinc compounds, or zinc alloys, hot-dipped galvanized steel, galvanealed steel, steel plated with zinc alloy, aluminum alloys, aluminum plated steel, aluminum alloy plated steel, suitable electropositive metals for deposition thereon include, for example, nickel, copper, silver, and gold, as well as mixtures thereof.

When the electropositive metal is or includes copper, both soluble and insoluble compounds may serve as the source of copper in the pretreatment composition. For example, the supplying source of copper ions in the pretreatment composition may be a water soluble copper compound. Specific examples of such compounds include, but are not limited to, copper sulfate, copper nitrate, copper pyrophosphate, copper thiocyanate, copper bromide, copper oxide, copper hydroxide, copper chloride, copper fluoride, copper fluorosilicate, copper fluoroborate and copper iodate, as well as copper salts of carboxylic acids in the homologous series formic acid to decanoic acid.

The electropositive metal, if present at all, may be present in the deoxidizing composition in an amount of at least 2 ppm based on the total weight of the deoxidizing composition, such as at least 4 ppm, such as at least 6 ppm, such as at least 8 ppm, such as at least 10 ppm. The electropositive metal, if present at all, may be present in the deoxidizing composition in an amount of no more than 100 ppm based on the total weight of the deoxidizing composition, such as no more than 80 ppm, such as no more than 60 ppm, such as no more than 40 ppm, such as no more than 20 ppm. The electropositive metal, if present at all, may be present in the deoxidizing composition in an amount of from 2 ppm to 100 ppm based on the total weight of the deoxidizing composition, such as from 4 ppm to 80 ppm, such as from 6 ppm to 60 ppm, such as from 8 ppm to 40 ppm, such as from 10 ppm to 20 ppm.

A source of fluoride may be present in the deoxidizing composition described herein. The fluoride may be present in the deoxidizing composition as either free fluoride and/or bound fluoride. The free fluoride may be derived from a compound or complex comprising the Group IVA and/or the Group IVB metals described above and/or may be derived from a compound or complex other than a compound or complex comprising the Group IVA and/or the Group IVB metals. As used herein the amount of fluoride disclosed or reported in the deoxidizing composition is referred to as "free fluoride," that is, fluoride present in the deoxidizing composition that is not bound to metal ions or hydrogen ions, as measured in parts per million of fluoride. Free fluoride is defined herein as being able to be measured using, for example, an Orion Dual Star Dual Channel Benchtop Meter equipped with a fluoride ion selective electrode ("ISE") available from Thermoscientific, the symphony^{®} Fluoride Ion Selective Combination Electrode supplied by VWR International, or similar electrodes. See, e.g., Light and Cappuccino, Determination of fluoride in toothpaste using an ion-selective electrode, J. Chem. Educ., 52:4, 247-250, April 1975. The fluoride ISE may be standardized by immersing the electrode into solutions of known fluoride concentration and recording the reading in millivolts, and then plotting these millivolt readings in a logarithmic graph. The millivolt reading of an unknown sample can then be compared to this calibration graph and the concentration of fluoride determined. Alternatively, the fluoride ISE can be used with a meter that will perform the calibration calculations internally and thus, after calibration, the concentration of the unknown sample can be read directly.

The free fluoride of the deoxidizing composition may be present in an amount of at least 2 ppm based on a total weight of the deoxidizing composition, such as at least 5 ppm free fluoride, such as at least 10 ppm free fluoride. The free fluoride of the deoxidizing composition may be present in an amount of no more than 100 ppm based on a total weight of the deoxidizing composition, such as no more than 40 ppm free fluoride, such as no more than 25 ppm free fluoride. The free fluoride of the deoxidizing composition may be present in an amount of 2 ppm free fluoride to 100 ppm free fluoride based on a total weight of the deoxidizing composition, such as 5 ppm free fluoride to 40 ppm free fluoride, such as 10 ppm free fluoride to 25 ppm free fluoride.

Optionally, the deoxidizing composition may further comprise a source of phosphate ions, such as inorganic phosphate compounds. For clarity, when used herein, "phosphate ions" refers to phosphate ions that derive from or originate from inorganic phosphate compounds. For example, in some instances, phosphate ions may be present in an amount of greater than 5 ppm based on total weight of the deoxidizing composition, such as 10 ppm, such as 20 ppm. In some instances, phosphate ions may be present in an amount of no more than 60 ppm based on total weight of the deoxidizing composition, such as no more than 40 ppm, such as no more than 30 ppm. In some instances, phosphate ions may be present in an amount of from 5 ppm to 60 ppm based on total weight of the deoxidizing composition, such as from 10 ppm to 40 ppm, such as from 20 ppm to 30 ppm.

Optionally, the deoxidizing composition may comprise a homopolymer or copolymer comprising a phosphorous-containing monomeric subunit m1 and optionally a non-phosphorous-containing monomeric subunit m2. Any of the monomeric subunits m1 and m2 described herein may be useful in the deoxidizing composition.

The copolymer may be a dipolymer, a terpolymer, or a higher polymer. The homopolymer or copolymer may be a statistical or a block homopolymer or copolymer and may be formed by radical continuous or batchwise polymerization.

As used herein, the term "(meth)acrylic acid," when used with respect to the monomeric units, refers to acrylic and/or methacrylic acid subunits.

As used herein, the term "(meth)acrylate" refers to an acrylate, a methacrylate, or a mixture of acrylate and methacrylate.

As used herein, the terms "homopolymer" and "homopolymer comprising monomeric subunits m1," when used with respect to the homopolymer disclosed herein, refers to a homopolymer resulting from the polymerization of one kind of monomer m1, wherein the homopolymer does not comprise any other monomeric subunits.

As used herein, the terms "copolymer," when used with respect to the present invention, refers to a dipolymer or higher copolymer resulting from the polymerization of at least one kind of monomer m1 and at least one kind of monomer m2 or at least two kinds of monomers m1. For clarity, "copolymer" includes dipolymers, terpolymers, and higher copolymers.

As used herein, the terms "dipolymer," when used with respect to the copolymer of the present invention, refers to a copolymer resulting from the polymerization of one kind monomer m1 and one kind of monomer m2 or two kinds of monomers m1.

As used herein, the terms "terpolymer," when used with respect to the present invention, refers to a copolymer resulting from the polymerization of three monomeric subunit types, where at least one monomer is m1.

Suitable examples of the phosphorous-containing monomeric subunits m1 include organophosphorous compounds containing phosphates, phosphate salts, and/or phosphate esters, phosphonic acids, phosphonic acid salts, and/or phosphonic esters, and/or phosphinic acids, phosphinic acid salts, and/or phosphinic esters. Examples include, but are not limited to, vinyl phosphonic acid, dimethyl vinyl phosphonate, diethyl vinyl phosphonate, or other dialkyl vinyl phosphonates, maleic acid dimethyl phosphonate, maleic acid diethyl phosphonate, phosphate-, phosphonate-, or phosphinate-substituted methacrylate or acrylate monomers, phosphate-, phosphonate-, or phosphinate-substituted acrylamide monomers, or other monomers containing phosphorus-containing substituents and a polymerizable bond.

Suitable examples of phosphorous-containing monomeric subunits m1 include those comprising the structure of Formula I: 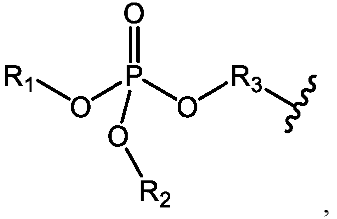 wherein R₁ and R₂ comprise hydrogen, a cation, an alkyl radical, an aryl radical, or a phosphoester group, and R₃ comprises an organic linking group terminating in an atom that is covalently bonded to an atom present in the addition polymer backbone. The organic linking group may comprise at least one carbon atom, and may comprise additional functional groups, such as, for example, one or more ether, amine, or hydroxyl functional groups, among other functional groups, and at least a portion of the organic linking group may comprise a polyether if at least two ether groups are present. The organic linking group may comprise an organic chain, and the organic chain may terminate in a carbon atom on either side of the chain.

Other suitable examples of phosphorous-containing monomeric subunits m1 include those comprising the structure of Formula II: 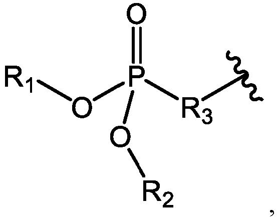 wherein R₁ and R₂ comprises hydrogen, a cation, an alkyl radical, an aryl radical, or a phosphoester group, wherein R₁ and R₂ may be the same or different, and wherein R₃ comprises an organic linking group terminating in an atom that is covalently bonded to a carbon atom present in the addition polymer backbone. The organic linking group may comprise at least one carbon atom, and may comprise additional functional groups, such as, for example, one or more ether, amine, or hydroxyl functional groups, among other functional groups, and at least a portion of the organic linking group may comprise a polyether if at least two ether groups are present. The organic linking group may comprise an organic chain, and the organic chain may terminate in a carbon atom on either side of the chain.

Further suitable examples of phosphorous-containing monomeric subunits m1 include those comprising the structure of Formula III: 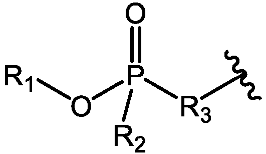 wherein R₁ comprises hydrogen, a cation, an alkyl radical, an aryl radical, or a phosphoester group, R₂ comprises hydrogen, an alkyl radical, or an aryl radical, and R₃ comprises an organic linking group terminating in an atom that is covalently bonded to an atom present in the addition polymer backbone. The organic linking group may comprise at least one carbon atom, and may comprise additional functional groups, such as, for example, one or more ether, amine, or hydroxyl functional groups, among other functional groups, and at least a portion of the organic linking group may comprise a polyether if at least two ether groups are present. The organic linking group may comprise an organic chain, and the organic chain may terminate in a carbon atom on either side of the chain.

Further suitable examples of phosphorus-containing monomeric subunits m1 include those comprising a polymerizable double bond and a phosphorus containing functional group such as a phosphine, phosphine oxide, phosphonium salt, or phosphate amide.

Monomeric subunit m2 may be any non-phosphorous-containing monomer that is capable of co-polymerizing with monomer subunits m1. For example, m2 may be a carboxylic acid- or anhydride-containing monomeric subunit.

Monomeric subunit m2 may be an acid or anhydride functional ethylenically unsaturated monomer. Suitable examples of monomeric subunits m2 include methacrylic acid, acrylic acid, maleic acid or its anhydride, fumaric acid, itaconic acid or its anhydride.

Monomeric subunit m2 also may be a (meth)acrylate. Suitable examples of (meth)acrylate monomeric subunits m2 include alkyl esters of (meth)acrylic acid. Non-limiting examples of alkyl esters of (meth)acrylic acid include methyl (meth)acrylate, ethyl (meth)acrylate and propyl (meth)acrylate. Other suitable examples of monomeric subunit m2 include (meth)acrylamides, such as N-isopropyl acrylamide, esters of maleic acid, fumaric acid, or itaconic acid, vinyl monomers such as styrenics, such as styrene sulfonic acid, vinyl ethers, or other monomers containing a polymerizable double bond, such as N-vinylpyrrolidone.

In an example, the copolymer disclosed herein may include a dipolymer comprising subunits m1 and m2 and having the structure of Formula IV: 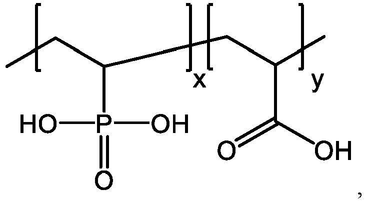 where x varies from greater than 5 to 100 mol% and y varies from 0 to 95 mol%.

Monomeric subunit m1 may be present in the homopolymer or copolymer in an amount of at least 5 molar percent based on total molarity of the homopolymer or copolymer, such as at least 20 molar percent, such as at least 40 molar percent, and may, in some instances, be present in the homopolymer or copolymer an amount of 100 molar percent based on total molarity of the homopolymer or copolymer, such as no more than 80 molar percent, such as no more than 70 molar percent. Monomeric subunit m1 may be present in the homopolymer or copolymer in an amount of 5 molar percent to 100 molar percent based on total molarity of the homopolymer or copolymer, such as 20 molar percent to 80 molar percent, such as 40 molar percent to 70 molar percent.

Monomeric subunit m2 may be absent from the homopolymer or copolymer. Monomeric subunit m2 may be present in the homopolymer or copolymer disclosed herein, if at all, in an amount of at least 0.1 molar percent based on total molarity of the homopolymer or copolymer, such as at least 20 molar percent, such as at least 30 molar percent, and may, in some instances, be present in the homopolymer or copolymer an amount of 95 molar percent based on total molarity of the homopolymer or copolymer, such as at least 80 molar percent, such as at least 30 molar percent. Monomeric subunit m2, if present at all, may be present in the homopolymer or copolymer in an amount of 0.1 molar percent to 95 molar percent based on total molarity of the homopolymer or copolymer, such as 20 molar percent to 80 molar percent, such as 30 molar percent to 60 molar percent.

The homopolymer or copolymer, if present at all, may be present in the deoxidizing composition in an amount of at least 100 ppm based on total weight of the deoxidizing composition, such as at least 150 ppm, such as at least 300 ppm, such as at least 400 ppm, and may, in some instances, be present in the deoxidizing composition in an amount of no more than 3000 ppm based on total weight of the deoxidizing composition, such as no more than 1000 ppm, such as no more than 750 ppm, such as no more than 600 ppm. The homopolymer or copolymer, if present at all, may be present in the deoxidizing composition in an amount of 100 ppm to 3000 ppm based on total weight of the deoxidizing composition, such as 150 ppm to 1000 ppm, such as 300 ppm to 750 ppm, such as 400 ppm to 600 ppm.

The pH of the deoxidizing composition may be at least 1.0, such as at least 2.0, and in some instances may be 3.0 or less, such as 2.5 or less. The pH of the deoxidizing composition may, in some instances, be 1.0 to 3.0, such as 2.0 to 2.5, and may be adjusted using, for example, any acid and/or base as is necessary. The pH of the deoxidizing composition may be maintained through the inclusion of an acidic material, including water soluble and/or water dispersible acids, such as nitric acid, sulfuric acid, and/or phosphoric acid. The pH may be maintained through the inclusion of a basic material, including water soluble and/or water dispersible bases, such as sodium hydroxide, sodium carbonate, potassium hydroxide, ammonium hydroxide, ammonia, and/or amines such as triethylamine, methylethyl amine, or mixtures thereof.

The deoxidizing composition may comprise a carrier, such as an aqueous medium, so that the composition is in the form of a solution or dispersion of the metals in the carrier. The deoxidizing composition optionally may contain other materials such as nonionic surfactants and auxiliaries conventionally used in the art of substrate protection. In the aqueous medium, water dispersible organic solvents, for example, alcohols with up to 8 carbon atoms such as methanol, isopropanol, and the like, may be present; or glycol ethers such as the monoalkyl ethers of ethylene glycol, diethylene glycol, or propylene glycol, and the like. When present, water dispersible organic solvents are typically used in amounts up to ten percent by volume based on the total volume of aqueous medium.

Other optional materials that may be included in the deoxidizing compositions disclosed herein include surfactants that function as defoamers or substrate wetting agents. Anionic, cationic, amphoteric, and/or nonionic surfactants may be used. Defoaming surfactants may optionally be present at levels up to 1 weight percent, such as up to 0.1 percent by weight, and wetting agents are typically present at levels up to 2 percent, such as up to 0.5 percent by weight based on the total weight of the composition.

Optionally, the deoxidizing compositions described herein may exclude chromium or chromium-containing compounds. As used herein, the term "chromium-containing compound" refers to materials that include trivalent and/or hexavalent chromium. Non-limiting examples of such materials include chromic acid, chromium trioxide, chromic acid anhydride, dichromate salts, such as ammonium dichromate, sodium dichromate, potassium dichromate, and calcium, barium, magnesium, zinc, cadmium, strontium dichromate, chromium(III) sulfate, chromium(III) chloride, and chromium(III) nitrate. When a composition or a material deposited on a substrate surface by contacting the substrate surface is substantially free, essentially free, or completely free of chromium, this includes chromium in any form, such as, but not limited to, the trivalent and hexavalent chromium-containing compounds listed above.

Thus, optionally, the deoxidizing compositions disclosed herein and/or material deposited on a substrate surface by any of these compositions may be substantially free, may be essentially free, and/or may be completely free of one or more of any of the elements or compounds listed in the preceding paragraph. A composition or a material deposited on a substrate surface by a composition that is substantially free of chromium or chromium-containing compounds means that chromium or derivatives thereof are not intentionally added, but may be present in trace amounts, such as because of impurities or unavoidable contamination from the environment. In other words, the amount of material is so small that it does not affect the properties of the composition or deposited material; in the case of chromium, this may further include that the element or compounds thereof are not present in the composition and/or deposited material in such a level that it causes a burden on the environment. The term "substantially free" means that the composition and/or deposited material contain less than 10 ppm of any or all of the elements or compounds listed in the preceding paragraph based on total weight of the composition or the total weight of a coating formed on the substrate, if any at all. The term "essentially free" means that the composition and/or deposited material contain less than 1 ppm of any or all of the elements or compounds listed in the preceding paragraph, if any at all. The term "completely free" means that the compositions and/or deposited material contain less than 1 ppb of any or all of the elements or compounds listed in the preceding paragraph, if any at all.

Optionally, the deoxidizing compositions described herein may exclude phosphate ions or inorganic phosphate-containing compounds and/or the formation of sludge, such as aluminum phosphate, iron phosphate, and/or zinc phosphate, formed in the case of using a treating agent based on zinc phosphate. As used herein, "phosphate-containing compounds" include compounds containing the element phosphorous such as ortho phosphate, pyrophosphate, metaphosphate, tripolyphosphate, organophosphonates, and the like, and can include, but are not limited to, monovalent, divalent, or trivalent cations such as: sodium, potassium, calcium, zinc, nickel, manganese, aluminum and/or iron. When a composition and/or a material deposited on a substrate surface by deposition of the composition is substantially free, essentially free, or completely free of phosphate, this includes phosphate ions or compounds containing phosphate in any form.

Thus, the deoxidizing compositions and/or a material deposited on a substrate surface by deposition of the compositions may be substantially free, or in some cases may be essentially free, or in some cases may be completely free, of one or more of any of the ions or compounds listed in the preceding paragraph. A composition and/or deposited material that is substantially free of phosphate means that phosphate ions or compounds containing phosphate are not intentionally added, but may be present in trace amounts, such as because of impurities or unavoidable contamination from the environment. In other words, the amount of material is so small that it does not affect the properties of the composition; this may further include that phosphate is not present in the composition and/or deposited materials in such a level that they cause a burden on the environment. The term "substantially free" means that a compositions and/or deposited material contain less than 5 ppm of any or all of the phosphate anions or compounds listed in the preceding paragraph based on total weight of the composition or the coating formed on the substrate, respectively, if any at all. The term "essentially free" means that the composition and/or deposited material less than 1 ppm of any or all of the phosphate anions or compounds listed in the preceding paragraph. The term "completely free" means that the composition and/or deposited material contain less than 1 ppb of any or all of the phosphate anions or compounds listed in the preceding paragraph, if any at all.

### Coating Compositions

The system of the present invention comprises a coating composition as defined in claim 1. The coating composition comprises, or may consist essentially of, or consist of, a first component, a second component, and elastomeric particles. The first component comprises, or may consist essentially of, or consist of, an epoxy-containing compound. The second component may comprise, or consist essentially of, or consist of, a diamine comprising a cyclic ring and/or a polyamine comprising a cyclic ring, wherein the cyclic ring of the diamine and/or the polyamine has at least one carbon positioned between the amino functional groups and the cyclic ring structure. The diamine and/or polyamine may chemically react with the epoxy-containing component. The composition may be a 2K composition.

Alternatively, or in addition, the coating composition comprises, or may consist essentially of, or consist of, the first component, the second component, and elastomeric particles, wherein at least 50% by weight of the elastomeric particles comprise, or consist essentially of, or consist of, a styrene butadiene core based on total weight of the elastomeric particles.

The first component of the composition comprises an epoxy-containing compound. Suitable epoxy-containing compounds that may be used include monoepoxides, polyepoxides, or combinations thereof.

Suitable monoepoxides that may be used include glycidol, monoglycidyl ethers of alcohols and phenols, such as phenyl glycidyl ether, n-butyl glycidyl ether, cresyl glycidyl ether, isopropyl glycidyl ether, glycidyl versatate, for example, CARDURA E available from Shell Chemical Co., and glycidyl esters of monocarboxylic acids such as glycidyl neodecanoate, and mixtures of any of the foregoing.

Useful epoxy-containing compounds that can be used include polyepoxides (having an epoxy functionality greater than 1), epoxy adducts, or combinations thereof. Suitable polyepoxides include polyglycidyl ethers of Bisphenol A, such as Epon^{®} 828 and 1001 epoxy resins, and Bisphenol F polyepoxides, such as Epon^{®} 862, which are commercially available from Hexion Specialty Chemicals, Inc. Other useful polyepoxides include polyglycidyl ethers of polyhydric alcohols, polyglycidyl esters of polycarboxylic acids, polyepoxides that are derived from the epoxidation of an olefinically unsaturated alicyclic compound, polyepoxides containing oxyalkylene groups in the epoxy molecule, and epoxy novolac resins. Still other non-limiting epoxy components include epoxidized Bisphenol A novolacs, epoxidized phenolic novolacs, epoxidized cresylic novolac, isosorbide diglycidyl ether, triglycidyl p-aminophenol, and triglycidyl p-aminophenol bismaleimide, triglycidyl isocyanurate, tetraglycidyl 4,4'-diaminodiphenylmethane, and tetraglycidyl 4,4'-diaminodiphenylsulphone. The epoxy-containing compound may also comprise a carboxyl-terminated butadiene-acrylonitrile copolymer modified epoxy-containing compound. The epoxy-containing compound may also comprise an epoxy-containing acrylic, such as glycidyl methacrylate.

The epoxy-containing compound may comprise an epoxy-adduct. The composition may comprise one or more epoxy-adducts. As used herein, the term "epoxy-adduct" refers to a reaction product comprising the residue of an epoxy and at least one other compound that does not include an epoxide functional group. For example, the epoxy-adduct may comprise the reaction product of reactants comprising an epoxy, a polyol, and an anhydride.

The epoxy used to form the epoxy-adduct may comprise any of the epoxy-containing compounds listed above that may be included in the composition.

The polyol used to form the epoxy-adduct may include diols, triols, tetraols and higher functional polyols. Combinations of such polyols may also be used. The polyols may be based on a polyether chain derived from ethylene glycol, propylene glycol, butylene glycol, hexylene glycol and the like as well as mixtures thereof. The polyol may also be based on a polyester chain derived from ring opening polymerization of caprolactone (referred to as polycaprolactone-based polyols hereinafter). Suitable polyols may also include polyether polyols, polyurethane polyols, polyurea polyols, acrylic polyols, polyester polyols, polybutadiene polyols, hydrogenated polybutadiene polyols, polycarbonate polyols, polysiloxane polyols, and combinations thereof. Polyamines corresponding to polyols may also be used, and in this case, amides instead of carboxylic esters will be formed with the anhydrides.

The polyol may comprise a polycaprolactone-based polyol. The polycaprolactone-based polyols may comprise diols, triols or tetraols terminated with primary hydroxyl groups. Commercially available polycaprolactone-based polyols include those sold under the trade name Capa^{™} from Perstorp Group, such as, for example, Capa 2054, Capa 2077A, Capa 2085, Capa 2205, Capa 3031, Capa 3050, Capa 3091 and Capa 4101.

The polyol may comprise a polytetrahydrofuran-based polyol. The polytetrahydrofuran-based polyols may comprise diols, triols or tetraols terminated with primary hydroxyl groups. Commercially available polytetrahydrofuran-based polyols include those sold under the trade name Terathane^{®}, such as Terathane^{®} PTMEG 250 and Terathane^{®} PTMEG 650 which are blends of linear diols in which the hydroxyl groups are separated by repeating tetramethylene ether groups, available from Invista. In addition, polyols based on dimer diols sold under the trade names Pripol^{®}, Solvermol^{™} and Empol^{®}, available from Cognis Corporation, or bio-based polyols, such as the tetrafunctional polyol Agrol 4.0, available from BioBased Technologies, may also be utilized.

The anhydride that may be used to form the epoxy-adduct may comprise any suitable acid anhydride known in the art. For example, the anhydride may comprise hexahydrophthalic anhydride and its derivatives (e.g., methyl hexahydrophthalic anhydride); phthalic anhydride and its derivatives (e.g., methyl phthalic anhydride); maleic anhydride; succinic anhydride; trimelletic anhydride; pyromelletic dianhydride (PMDA); 3,3',4,4'-oxydiphthalic dianhydride (ODPA); 3,3',4,4'-benzophenone tetracarboxylic dianhydride (BTDA); and 4,4'-diphthalic (hexafluoroisopropylidene) anhydride (6FDA).

The epoxy-adduct may comprise a diol, a monoanhydride, and a diepoxy compound, wherein the mole ratio of diol, monoanhydride, and diepoxy compounds in the epoxy-adduct may vary from 0.5:0.8:1.0 to 0.5:1.0:6.0.

The epoxy-adduct may comprise a triol, a monoanhydride, and a diepoxy compound, wherein the mole ratio of triol, monoanhydride, and diepoxy compounds in the epoxy-adduct may vary from 0.5:0.8:1.0 to 0.5:1.0:6.0.

The epoxy-adduct may comprise a tetraol, a monoanhydride, and a diepoxy compound, wherein the mole ratio of tetraol, monoanhydride, and diepoxy compounds in the epoxy-adduct may vary from 0.5:0.8:1.0 to 0.5:1.0:6.0.

Other suitable epoxy-containing compounds include epoxy-adducts such as epoxy polyesters formed as the reaction product of reactants comprising an epoxy-containing compound, a polyol and an anhydride, as described in U.S. Patent No. 8,796,361, col. 3, line 42 through col. 4, line 65.

**In** another example, the epoxy-containing compound of the composition may further include elastomeric particles. As used herein, "elastomeric particles" refers to particles comprised of one or more materials having at least one glass transition temperature (Tg) of greater than -150°C and less than 30°C, calculated, for example, using the Fox Equation. The elastomeric particles may be phase-separated from the epoxy in the epoxy-containing component. As used herein, the term "phase-separated" means forming a discrete domain within a matrix of the epoxy-containing compound.

The elastomeric particles may have a core/shell structure. Suitable core-shell elastomeric particles may be comprised of an acrylic shell and an elastomeric core. The core may comprise natural or synthetic rubbers, polybutadiene, styrene-butadiene, polyisoprene, chloroprene, acrylonitrile butadiene, butyl rubber, polysiloxane, polysulfide, ethylene-vinyl acetate, fluoroelastomer, polyolefin, hydrogenated styrene-butadiene, or combinations thereof.

The elastomeric particles may optionally be included in an epoxy carrier resin for introduction into the coating composition. Suitable finely dispersed core-shell elastomeric particles in an average particle size ranging from 20 nm to 400 nm may be master-batched in epoxy resin such as aromatic epoxides, phenolic novolac epoxy resin, bisphenol A and/or bisphenol F diepoxide, and/or aliphatic epoxides, which include cyclo-aliphatic epoxides, at concentrations ranging from 1% to 80% core-shell elastomeric particles by weight based on the total weight of the elastomeric dispersion, such as from 5% to 50%, such as from 15% to 35%. Suitable epoxy resins may also include a mixture of epoxy resins. When utilized, the epoxy carrier resin may be an epoxy-containing component such that the weight of the epoxy-containing component present in the coating composition includes the weight of the epoxy carrier resin.

Exemplary non-limiting commercial core-shell elastomeric particle products using poly(butadiene) rubber particles that may be utilized in the adhesive composition include core-shell poly(butadiene) rubber powder (commercially available as PARALOID^{™} EXL 2650A from Dow Chemical), a core-shell poly(butadiene) rubber dispersion (25% core-shell rubber by weight) in bisphenol F diglycidyl ether (commercially available as Kane Ace MX 136), a core-shell poly(butadiene) rubber dispersion (33% core-shell rubber by weight) in Epon^{®} 828 (commercially available as Kane Ace MX 153), a core-shell poly(butadiene) rubber dispersion (33% core-shell rubber by weight) in Epiclon^{®} EXA-835LV (commercially available as Kane Ace MX 139), a core-shell poly(butadiene) rubber dispersion (37% core-shell rubber by weight) in bisphenol A diglycidyl ether (commercially available as Kane Ace MX 257), and a core-shell poly(butadiene) rubber dispersion (37% core-shell rubber by weight) in Epon^{®} 863 (commercially available as Kane Ace MX 267), each available from Kaneka Texas Corporation, and acrylic rubber dispersions.

Exemplary non-limiting commercial core-shell elastomeric particle products using styrene-butadiene rubber particles that may be utilized in the adhesive composition include a core-shell styrene-butadiene rubber powder (commercially available as CLEARSTRENGTH^{®} XT100 from Arkema), core-shell styrene-butadiene rubber powder (commercially available as PARALOID^{™} EXL 2650J), a core-shell styrene-butadiene rubber dispersion (33% core-shell rubber by weight) in bisphenol A diglycidyl ether (commercially available as Fortegra^{™} 352 from Olin^{™}), core-shell styrene-butadiene rubber dispersion (33% rubber by weight) in low viscosity bisphenol A diglycidyl ether (commercially available as Kane Ace MX 113), a core-shell styrene-butadiene rubber dispersion (25% core-shell rubber by weight) in bisphenol A diglycidyl ether (commercially available as Kane Ace MX 125), a core-shell styrene-butadiene rubber dispersion (25% core-shell rubber by weight) in bisphenol F diglycidyl ether (commercially available as Kane Ace MX 135), a core-shell styrene-butadiene rubber dispersion (25% core-shell rubber by weight) in D.E.N.^{™}-438 phenolic novolac epoxy (commercially available as Kane Ace MX 215), a core-shell styrene-butadiene rubber dispersion (25% core-shell rubber by weight) in Araldite^{®} MY-721 multi-functional epoxy (commercially available as Kane Ace MX 416), a core-shell styrene-butadiene rubber dispersion (25% core-shell rubber by weight) in MY-0510 multi-functional epoxy (commercially available as Kane Ace MX 451), a core-shell styrene-butadiene rubber dispersion (25% core-shell rubber by weight) in Syna Epoxy 21 Cyclo-aliphatic Epoxy from Synasia (commercially available as Kane Ace MX 551), and a core-shell styrene-butadiene rubber dispersion (25% core-shell rubber by weight) in polypropylene glycol (MW 400) (commercially available as Kane Ace MX 715), each available from Kaneka Texas Corporation.

Exemplary non-limiting commercial core-shell elastomeric particle products using polysiloxane rubber particles that may be utilized in the adhesive composition include a core-shell polysiloxane rubber powder (commercially available as GENIOPERL^{®} P52 from Wacker), a core-shell polysiloxane rubber dispersion (40% core-shell rubber by weight) in bisphenol A diglycidyl ether (commercially available as ALBIDUR^{®} EP2240A from Evonik), a core-shell polysiloxane rubber dispersion (25% core-shell rubber by weight) in jER^{™}828 (commercially available as Kane Ace MX 960), a core-shell polysiloxane rubber dispersion (25% core-shell rubber by weight) in Epon^{®} 863 (commercially available as Kane Ace MX 965) each available from Kaneka Texas Corporation.

The average particle size of the elastomeric particles may be at least 20 nm, as measured by transmission electron microscopy (TEM), such as at least 30 nm, such as at least 40 nm, such as at least 50 nm, and may be no more than 400 nm, such as no more than 300 nm, such as no more than 200 nm, such as no more than 150 nm. The average particle size of the elastomeric particles may be 20 nm to 400 nm as measured by TEM, such as 30 nm to 300 nm, such as 40 nm to 200 nm, such as 50 nm to 150 nm. Suitable methods of measuring particle sizes by TEM include suspending elastomeric particles in a solvent selected such that the particles do not swell, and then drop casting the suspension onto a TEM grid which is allowed to dry under ambient conditions. For example, epoxy resin containing core-shell rubber elastomeric particles from Kaneka Texas Corporation can be diluted in butyl acetate for drop casting. Particle size measurements may be obtained from images acquired using a Tecnai T20 TEM operating at 200kV and analyzed using ImageJ software, or an equivalent instrument and software.

The composition further comprises a second component comprising a curing agent that chemically reacts with the epoxy-containing compound of the first component.

The curing agent of the second component comprises a diamine comprising a cyclic ring and/or a polyamine comprising a cyclic ring and includes ortho-, meta-, and paraisomers of aromatic diamines and polyamines or any mixtures of these isomers. The diamine and/or polyamine comprising a cyclic ring also includes amines containing non-aromatic ring structures such as aliphatic rings and/or heterocyclic rings. The diamine and/or the polyamine curing agent may be used to at least partially cure the composition by reacting with the epoxy-containing compound of the first component to form a polymeric matrix upon combining the first and second components of the composition.

The diamine and/or the polyamine contains a cyclic ring. The cyclic ring may be intermolecular or may be pendant. For example, the diamine and/or the polyamine may comprise an aromatic ring such as xylylene diamine, phenylene diamine, methylenedianiline, diaminotoluene, diaminophenol, diamino diphenyl sulfone, 4,4'-oxydianiline, diethyl toluene diamine, methyl-bis(methylthio)benzenediamine (Ethacure 300, for example, available from Albemarle), aminobenzylamine, 5,5'-methylenedifurfurylamine, 5,5'-ethylidenedifurfurylamine, or combinations thereof. The diamine and/or polyamine may also comprise a non-aromatic cyclic ring such as isophorone diamine, 4,4-diaminodicyclohexylmethane, diaminocyclohexane, bis(aminomethyl)norbornane, bis(aminomethyl)cyclohexane, piperazine, aminoethylpiperazine, bis(aminopropyl)piperazine, or combinations thereof.

In other examples, the curing agent of the second component may comprise an oligomeric cyclic ring-containing diamine or polyamine in addition to the diamine and/or the polyamine described above. As used herein, the term "oligomer" refers to a molecular complex of monomers having a finite number of repeating units. Optionally, the amino-functional oligomer may contain a cyclic ring. In an example, the amine- functional oligomer may comprise an oligomeric amine reaction product of xylylene diamine and epichlorohydrin, which is commercially available as Gaskamine 328 (Mitsubishi Gas). In an example, the aminefunctional oligomer may have one of the following structures: 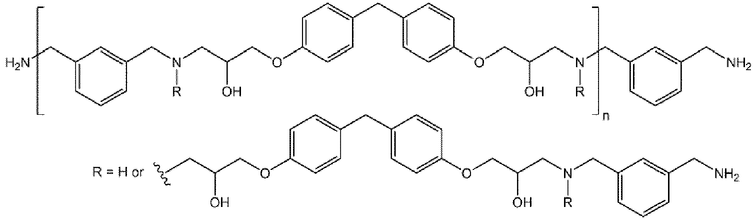 where n is at least 1 and the presence of R substituents on the amine demonstrate the possibility of branched structures (Structures I and II, respectively). In other examples, the curing agent of the second component may comprise a cyclic ring containing diamine partially reacted with a monofunctional epoxide. In an example, the curing agent of the second component may comprise the reaction product of excess xylylene diamine and glycidol, having the following structure:

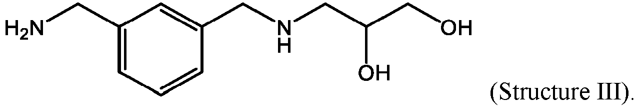

Optionally, in addition to the diamine or polyamine containing a cyclic ring, the second component may additionally comprise a monoamine, diamine, or polyamine. Useful monoamines include, but are not limited to, aniline, ethanolamine, N-methylethanolamine, butylamine, benzylamine, allylamine, ethylhexylamine, polypropylene glycol monoamines such as Jeffamine-M600 and Jeffamine M-2005 available from Huntsman, polyethylene glycol monoamines such as Jeffamine M-1000 and Jeffamine M-2070 available from Huntsman. Useful diamines include, but are not limited to, ethylenediamine, tetramethylenediamine, hexamethylenediamine, 2-methylpentamethylenediamine (available as Dytek A from Invista), polyether diamines such as those of the Jeffamine D, ED, or EDR series available from Huntsman. Useful polyamines include but are not limited to diethylenetriamine, triethylenetetramine, tetraethylenepentamine, tris(2-aminoethyl)amine, tris(3-aminopropyl)amine, and trifunctional polyether amines such as the Jeffamine T-403, Jeffamine T-3000, and Jeffamine T-5000 available from Huntsman.

Optionally, the curing agent of the second component may comprise a diamine comprising a cyclic ring and/or a polyamine comprising a cyclic ring in an amount of at least 20 percent by weight based on total weight of all monoamines, diamines and/or polyamines present in the second component, such as at least 30 percent by weight, such as at least 40 percent by weight, such as at least 50 percent by weight, and may comprise a diamine comprising a cyclic ring and/or a polyamine comprising a cyclic ring in an amount of 100 percent by weight based on total weight of all monoamines, diamines and/or polyamines in the second component, such as no more than 90 percent by weight, such as no more than 80 percent by weight, such as no more than 70 percent by weight, such as no more than 60 percent by weight. The curing agent of the second component may comprise a diamine comprising a cyclic ring and/or a polyamine comprising a cyclic ring in an amount of 20 percent by weight to 100 percent by weight based on total weight of all monoamines, diamines, and/or polyamines in the second component, such as 30 percent by weight to 90 percent by weight, such as 40 percent by weight to 80 percent by weight, such as 50 percent by weight to 70 percent by weight. In an example, the cyclic ring may comprise a benzene. In an example, the diamine comprising a cyclic ring may comprise xylylene diamine.

The diamine and/or polyamine curing agent may be present in the composition in an amount sufficient to provide a molar ratio of epoxide functional groups from the epoxy-containing compound to amine-hydrogens from the diamine and/or polyamine curing agent of at least 0.5:1.0, such as at least 0.75:1.0, and may be present in the composition in amount to provide a molar ratio of epoxide functional groups from the epoxy-containing compound to amine-hydrogens from the diamine and/or polyamine curing agent of no more than 1.5:1.0, such as no more than 1.25 to 1.0. The diamine and/or polyamine curing agent may be present in the composition in an amount sufficient to provide a molar ratio of epoxide functional groups from the epoxy-containing compound to amine-hydrogens from the diamine and/or polyamine curing agent of 0.5:1.0 to 1.5:1.0, such as 0.75:1.0 to 1.25 to 1.0.

The second component of the composition may further comprise elastomeric particles. Useful elastomeric particles include those described above, including elastomeric particles having a core-shell structure. For example, the elastomeric particles may optionally be introduced into the second component of the coating composition as solid particles, such as core-shell elastomeric particles having an average particle size of 20 nm to 400 nm.

Elastomeric particles, whether present in the first component and/or the second component, may be present in the composition in a total amount of at least 1 percent by weight based on total weight of the composition, such as at least 3 percent by weight, such as at least 5 percent by weight, and may be present in the composition in a total amount of no more than 50 percent by weight based on total weight of the composition, such as no more than 40 percent by weight, such as no more than 25 percent by weight. Elastomeric particles, if present at all, and whether present in the first component and/or the second component, may be present in the composition in a total amount of 1 percent by weight to 50 percent by weight based on total weight of the composition, such as 3 percent by weight to 40 percent by weight, such as 5 percent by weight to 25 percent by weight.

Optionally, the first component and/or the second component of the composition may further comprise an accelerator.

In examples, the accelerator may comprise, or consist essentially of, or consist of, a guanidine. It will be understood that "guanidine," as used herein, refers to guanidine and derivatives thereof. For example, the curing agent that may be used includes guanidines, substituted guanidines, substituted ureas, melamine resins, guanamine derivatives, and/or mixtures thereof. Examples of substituted guanidines are methylguanidine, dimethylguanidine, trimethylguanidine, tetramethylguanidine, methylisobiguanidine, dimethylisobiguanidine, tetramethylisobiguanidine, hexamethylisobiguanidine, heptamethylisobiguanidine and, more especially, cyanoguanidine (dicyandiamide, e.g. Dyhard^{®} available from AlzChem). Representatives of suitable guanamine derivatives which may be mentioned are alkylated benzoguanamine resins, benzoguanamine resins or methoxymethylethoxymethylbenzoguanamine.

For example, the guanidine may comprise a compound, moiety, and/or residue having the following general structure: 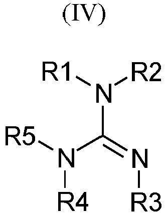 wherein each of R1, R2, R3, R4, and R5 (*i.e.,* substituents of structure (IV)) comprise hydrogen, (cyclo)alkyl, aryl, aromatic, organometallic, a polymeric structure, or together can form a cycloalkyl, aryl, or an aromatic structure, and wherein R1, R2, R3, R4, and R5 may be the same or different. As used herein, "(cyclo)alkyl" refers to both alkyl and cycloalkyl. When any of the R groups "together can form a (cyclo)alkyl, aryl, and/or aromatic group", it is meant that any two adjacent R groups are connected to form a cyclic moiety, such as the rings in structures (V) - (VIII) below.

It will be appreciated that the double bond between the carbon atom and the nitrogen atom that is depicted in structure (IV) may be located between the carbon atom and another nitrogen atom of structure (IV). Accordingly, the various substituents of structure (IV) may be attached to different nitrogen atoms depending on where the double bond is located within the structure.

The guanidine may comprise a cyclic guanidine such as a guanidine of structure (IV) wherein two or more R groups of structure (IV) together form one or more rings. In other words, the cyclic guanidine may comprise ≥1 ring(s). For example, the cyclic guanidine may either be a monocyclic guanidine (1 ring) such as depicted in structures (V) and (VI) below, or the cyclic guanidine may be bicyclic or polycyclic guanidine (≥2 rings) such as depicted in structures (VII) and (VIII) below.

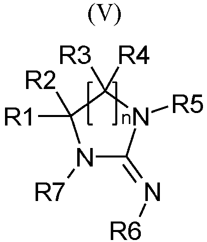

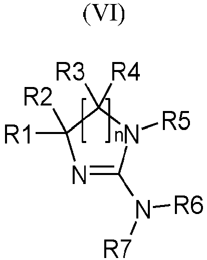

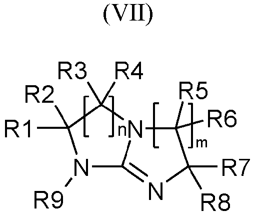

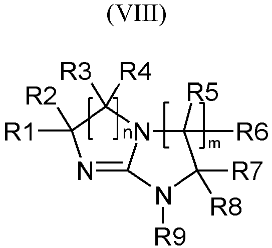

Each substituent of structures (V) and/or (VI), R1-R7, may comprise hydrogen, (cyclo)alkyl, aryl, aromatic, organometallic, a polymeric structure, or together can form a cycloalkyl, aryl, or an aromatic structure, and wherein R1-R7 may be the same or different. Similarly, each substituent of structures (VII) and (VIII), R1-R9, may be hydrogen, alkyl, aryl, aromatic, organometallic, a polymeric structure, or together can form a cycloalkyl, aryl, or an aromatic structure, and wherein R1-R9 may be the same or different. Moreover, in some examples of structures (VI) and/or (VI), certain combinations of R1-R7 may be part of the same ring structure. For example, R1 and R7 of structure (V) may form part of a single ring structure. Moreover, it will be understood that any combination of substituents (R1-R7 of structures (V) and/or (VI) as well as R1-R9 of structures (VII) and/or (VIII)) may be chosen so long as the substituents do not substantially interfere with the catalytic activity of the cyclic guanidine.

Each ring in the cyclic guanidine may be comprised of ≥5 members. For example, the cyclic guanidine may comprise a 5-member ring, a 6-member ring, and/or a 7-member ring. As used herein, the term "member" refers to an atom located in a ring structure. Accordingly, a 5-member ring will have 5 atoms in the ring structure ("n" and/or "m"=1 in structures (V)-(VIII)), a 6-member ring will have 6 atoms in the ring structure ("n" and/or "m"=2 in structures (V)-(VIII)), and a 7-member ring will have 7 atoms in the ring structure ("n" and/or "m"=3 in structures (V)-(VIII)). It will be appreciated that if the cyclic guanidine is comprised of ≥2 rings (e.g., structures (VII) and (VIII)), the number of members in each ring of the cyclic guanidine can either be the same or different. For example, one ring may be a 5-member ring while the other ring may be a 6-member ring. If the cyclic guanidine is comprised of ≥3 rings, then in addition to the combinations cited in the preceding sentence, the number of members in a first ring of the cyclic guanidine may be different from the number of members in any other ring of the cyclic guanidine.

It will also be understood that the nitrogen atoms of structures (V)-(VIII) may further have additional atoms attached thereto. Moreover, the cyclic guanidine may either be substituted or unsubstituted. For example, as used herein in conjunction with the cyclic guanidine, the term "substituted" refers to a cyclic guanidine wherein R5, R6, and/or R7 of structures (V) and/or (VI) and/or R9 of structures (VII) and/or (VIII) is not hydrogen. As used herein in conjunction with the cyclic guanidine, the term "unsubstituted" refers to a cyclic guanidine wherein R1-R7 of structures (V) and/or (VI) and/or R1-R9 of structures (VII) and/or (VIII) are hydrogen.

The cyclic guanidine may comprise a bicyclic guanidine, and the bicyclic guanidine may comprise 1,5,7-triazabicyclo[4.4.0]dec-5-ene ("TBD" or "BCG") or 7-methyl-1,5,7-triazabicyclo[4.4.0]dec-5-ene (MTBD).

Other useful accelerators may comprise amidoamine or polyamide accelerators, such as, for example, one of the Ancamide^{®} products available from Air Products, amine, amino-containing phenols, dihydrazide, imidazole, or dicyandiamide adducts and complexes, such as, for example, one of the Ajicure^{®} products available from Ajinomoto Fine Techno Company, 3,4-dichlorophenyl-N,N-dimethylurea (A.K.A. Diuron) available from Alz Chem, or combinations thereof.

Useful accelerators that may be included in the second component of the composition may comprise secondary amines, tertiary amines, cyclic tertiary amines, amidines, or combinations thereof. The cyclic tertiary amine may comprise 1,4-diazabicyclo[2.2.2]octane ("DABCO"), 1,8-diazabicylo[5.4.0]undec-7-ene ("DBU"), 1,5-diazabicyclo[4.3.0]non-5-ene ("DBN"), and combinations thereof. Additional examples of suitable accelerators include, pyridine, imidazole, dimethylaminopyridine, 1-methylimidazole, N,N'-carbonyldiimidazole, [2,2]bipyridine, 2,4,6-tris(dimethylamino methyl)phenol, 3,5-dimethylpyrazole, and combinations thereof. Additional examples of useful accelerators include Mannich bases, tetraalkyl ammonium salts, metal salts, and strong bases.

The accelerator, if present at all, may be present in the second component of the composition in an amount of at least 0.5 percent by weight based on total weight of the composition, such as at least 1 percent by weight, and may be present in an amount of no more than 55 percent by weight based on total weight of the composition, such as no more than 20 percent by weight. The accelerator, if present at all, may be present in the second component of the composition in an amount of 0.5 percent by weight to 55 percent by weight based on total weight of the composition, such as 1 percent by weight to 20 percent by weight.

A filler material or more than one filler material may optionally be added to the first and/or second component of the composition. Useful fillers that may be introduced to provide improved mechanical materials such as fiberglass, fibrous titanium dioxide, whisker type calcium carbonate (aragonite), and carbon fiber (which includes graphite and carbon nanotubes). In addition, fiber glass ground to 5 microns or wider and to 50 microns or longer may also provide additional tensile strength. Additionally, filler material may optionally be graphene and graphenic carbon particles (for example, xGnP graphene nanoplatelets commercially available from XG Sciences, and/or for example, carbon particles having structures comprising one or more layers of one-atom-thick planar sheets of sp2-bonded carbon atoms that are densely packed in a honeycomb crystal lattice. The average number of stacked layers may be less than 100, for example, less than 50. The average number of stacked layers may be 30 or less, such as 20 or less, such as 10 or less, such as 5 or less. The graphenic carbon particles may be substantially flat; however, at least a portion of the planar sheets may be substantially curved, curled, creased, or buckled. The particles typically do not have a spheroidal or equiaxed morphology. Suitable graphenic carbon particles are described in U.S. Publication No. 2012/0129980, at paragraphs [0059]-[0065]. Other suitable graphenic carbon particles are described in U.S. Pat. No. 9,562,175, at 6:6 to 9:52.

Organic and/or inorganic fillers, such as those that are substantially spherical, may optionally be added to the first and/or second component of the composition. Useful organic fillers that may be introduced include cellulose, starch, and acrylic. Useful inorganic fillers that may be introduced include borosilicate, aluminosilicate, calcium inosilicate (Wollastonite), mica, silica and calcium carbonate. The organic and inorganic fillers may be solid, hollow, or layered in composition and may range in size from 10 nm to 1 mm in at least one dimension, measured, for example by TEM or SEM.

Optionally, additional fillers, thixotropes, colorants, tints and/or other materials also may be added to the first and/or second component of the composition.

Useful thixotropes that may be used include untreated fumed silica and treated fumed silica, castor wax, clay, organo clay and combinations thereof. In addition, fibers such as synthetic fibers like Aramid^{®} fiber and Kevlar^{®} fiber, acrylic fibers, and/or engineered cellulose fiber may also be utilized.

Useful colorants, dyes, or tints may include red iron pigment, titanium dioxide, calcium carbonate, and phthalocyanine blue and combinations thereof.

Useful fillers that may be used in conjunction with thixotropes may include inorganic fillers such as inorganic clay or silica and combinations thereof.

Exemplary other materials that may be utilized include, for example, calcium oxide and carbon black and combinations thereof.

Such fillers, if present at all, may be present in the first and/or second component of the composition in an amount of no more than 25 percent by weight based on total weight of the composition, such as no more than 15 percent by weight, such as no more than 10 percent by weight, such as no more than 5 percent by weight. Such fillers may be present in the first and/or second component of the composition an amount of 0 percent to 25 percent by weight based on total weight of the composition, such as 0.1 percent by weight to 15 percent by weight, such as 0.5 percent by weight to 10 percent by weight, such as 1 percent by weight to 5 percent by weight.

Optionally, the composition may be substantially free, or essentially free, or completely free, of platy fillers such as talc, pyrophyllite, chlorite, vermiculite, or combinations thereof. Optionally, the composition may be substantially free, or essentially free, or completely free, of alumina fillers, including plate-like alumina particles, spherical alumina particles, and/or amorphous alumina particles.

The composition may further comprise an additive or more than one additive. As used herein, the term "additives" refers to ingredients or components included in the first and/or second component of the coating composition in addition to the epoxy-containing compound, the polyamine curing agent, the elastomeric particles, the accelerator (if any), and the fillers (if any) described herein. Exemplary non-limiting examples of such additives include flexibilizers such as Flexibilzer^{®} DY 965 from Huntsman Corporation, reactive liquid rubber, non-reactive liquid rubber, epoxy-amine adducts (such as those described above but, when present, different from the epoxy-containing compound present in the coating composition), epoxy-thiol adducts, blocked isocyanates, capped isocyanates, epoxy-urethanes, epoxy-ureas, modified epoxies from Hexion, HELOXY^{™} modifiers from Hexion, adhesion promoters, rust inhibitors, solvents, silane coupling agents such as Silquest A-187 from Momentive, flame retardants, colloidal silica such as NANOPOX^{®} dispersions from Evonik, thermoplastic resins, acrylic polymer beads such as ZEFIAC^{®} beads from AICA Kogyo Co, or combinations thereof.

Such additives, if present at all, may be present in the first and/or second component of the composition in an amount of at least 1 percent by weight based on total weight of the composition, such as at least 2 percent by weight, and may be present in the composition in an amount of no more than 25 percent by weight based on total weight of the composition, such as no more than 10 percent by weight. Such additives, if present at all, may be present in the first and/or second component of the composition in an amount of 1 percent by weight to 25 percent by weight based on total weight of the composition, such as 2 percent by weight to 10 percent by weight.

The composition may further comprise a cyclic carbonate-functional molecule. The cyclic carbonate-functional molecule may be present in the first component and/or the second component. Useful examples of cyclic carbonate-functional molecules include glycerol carbonate, propylene carbonate, and combinations thereof. The cyclic carbonate-functional molecule may be present in the epoxy component or may be pre-reacted with the diamine or polyamine containing a cyclic ring. In an example, the curing agent may comprise the reaction product of excess xylylene diamine with glycerol carbonate having the following structure:

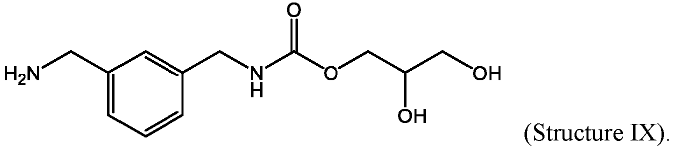

Such cyclic carbonate-functional molecule, if present at all, may be present in an amount of at least 0.1 percent by weight based on total weight of the composition, such as at least 1 percent by weight, such as at least 2 percent by weight, and may be present in an amount of no more than 10 percent by weight, such as no more than 8 percent by weight, such as no more than 6 percent by weight. Such cyclic carbonate-functional molecule, if present at all, may be present in an amount of 0.1 percent by weight to 10 percent by weight based on total weight of the composition, such as 1 percent by weight to 8 percent by weight, such as 2 percent by weight to 6 percent by weight.

### Methods

Disclosed herein are methods for treating a variety of substrates according to claim 13. The method comprises, or may consist essentially of, or consist of: contacting a surface of the substrate with the deoxidizing composition described above; and contacting the substrate surface with the coating composition described above. Optionally, the substrate surface may be cleaned. The deoxidizing composition may comprise, or consist essentially of, or consist of, a homopolymer or copolymer comprising, or consisting essentially of, or consisting of, a phosphorous-containing monomeric subunit m1 as described above. The deoxidizing composition comprises, or may consist essentially of, or consist of, a Group IVA metal and/or a Group IVB metal and free fluoride, wherein the deoxidizing composition has a pH of 1.0 to 3.0. The coating composition may be any of the coating compositions described above. Any suitable technique may be used to deposit such a coating composition onto the substrate, including, for example, brushing, dipping, flow coating, spraying and the like.

Following the cleaning step(s), the substrate optionally may be rinsed with tap water, deionized water, and/or an aqueous solution of rinsing agents in order to remove any residue. The wet substrate surface may be treated with a deoxidizing composition (described above) and/or with one of the coating compositions described below, or the substrate may be dried prior to treating the substrate surface, such as air dried, for example, by using an air knife, by flashing off the water by brief exposure of the substrate to, for example, 15°C to 100°C, such as 20°C to 90°C, or in a heater assembly using, for example, infrared heat, such as for 10 minutes at 70°C, or by passing the substrate between squeegee rolls.

According to the methods of the present invention, the solution or dispersion of the deoxidizing composition may be brought into contact with the substrate by any of a variety of known techniques, such as dipping or immersion, spraying, intermittent spraying, dipping followed by spraying, spraying followed by dipping, brushing, or roll-coating. The deoxidizing composition, when applied to the metal substrate, may be at a temperature ranging from 4°C to 85°C, such as 15.5°C to 43.3°C, such as 21°C to 32.2°C. For example, the deoxidation process may be carried out at ambient or room temperature. The contact time may be 5 seconds to 15 minutes, such as 10 seconds to 10 minutes, such as 15 seconds to 3 minutes.

Following the contacting with a deoxidizing composition disclosed herein, the substrate optionally may be air dried at room temperature or may be dried with hot air, for example, by using an air knife, by flashing off the water by brief exposure of the substrate to a high temperature, such as by drying the substrate in an oven at 15°C to 200°C or in a heater assembly using, for example, infrared heat, such as for 10 minutes at 70°C, or by passing the substrate between squeegee rolls. Following the contacting with a deoxidizing composition, the substrate optionally may be rinsed with tap water, deionized water, and/or an aqueous solution of rinsing agents in order to remove any residue and then optionally may be dried, for example air dried or dried with hot air as described in the preceding sentence, such as by drying the substrate in an oven at 15°C to 100°C, such as 20°C to 90°C, or in a heater assembly using, for example, infrared heat, such as for 10 minutes at 70°C, or by passing the substrate between squeegee rolls. Following the contacting with a deoxidizing composition, and any optional rinsing stages, a coating composition described herein may be deposited onto at least a portion of the surface of the substrate by any suitable technique, including, for example, brushing, dipping, flow coating, spraying and the like.

In an example, a bond may be formed between two substrates for a wide variety of potential applications in which the bond between the substrates provides particular mechanical properties related to both lap shear strength and displacement. A method of forming a bond may comprise, or consist essentially of, or consist of, contacting at least a portion of a surface of the substrate with a cleaning composition described herein, a deoxidizing composition described herein and/or a seal composition described herein, and contacting at least a portion of the substrate surface with an adhesive composition described above to a first substrate; contacting a second substrate to the adhesive composition such that the composition is located between the first substrate and the second substrate; and curing the composition, as described herein. For example, the composition may be applied to either one or both of the substrate materials being bonded to form an adhesive bond therebetween and the substrates may be aligned and pressure and/or spacers may be added to control bond thickness. The composition may be applied to cleaned or uncleaned (i.e., including oily or oiled) substrate surfaces.

The systems of the present invention may be applied to substrate surfaces, including, by way of non-limiting example, a vehicle body or components of an automobile frame or an airplane, or to armor assemblies such as those on a tank, or to protective clothing such as body armor, personal armor, suits of armor, and the like. The coating formed by the coating composition of the present invention provides sufficient lap shear strength and displacement and such lap shear strength and displacement are surprisingly increased when the substrate is treated with one of the deoxidizing compositions described hereinabove. The composition may be applied to cleaned (such as with one of the cleaning compositions described above) or uncleaned (i.e., including oily or oiled) substrate surfaces. It may also be applied to a substrate that has been pretreated, coated with an electrodepositable coating, coated with additional layers such as a primer, basecoat, or topcoat. The substrate may be treated with one of the deoxidizing compositions described above. An external energy source may subsequently be applied to cure the coating composition, such as baking in an oven.

As described above, substrates treated according to the systems and methods of the present invention may have a film, coating, or the like formed by a coating composition, such as a resinous composition, applied to at least a portion of the substrate surface. In examples, the coating composition may have a dry film thickness of at least 12.5 micrometers (0.5 mil), such as at least 25 micrometers (1 mil), such as at least 75 micrometers (3 mil), and in some instances may have a dry film thickness of no more than 1270 micrometers (50 mil), such as no more than 635 micrometers (25 mil), such as no more than 405 micrometers (16 mil). In examples, the coating composition may have a dry film thickness of 12.5 micrometers to 1270 micrometers, such as 25 micrometers to 635 micrometers, such as 75 micrometers to 405 micrometers.

### Substrates

The substrates that may be coated by the compositions disclosed herein are not limited. Suitable substrates useful in the present invention include, but are not limited to, materials such as metals or metal alloys, ceramic materials such as boron carbide or silicon carbide, polymeric materials such as hard plastics including filled and unfilled thermoplastic materials or thermoset materials, woven or non-woven fibrous sheets or grids, or composite materials. Other suitable substrates useful in the present invention include, but are not limited to, glass or natural materials such as wood. For example, suitable substrates include rigid metal substrates such as ferrous metals, aluminum, aluminum alloys, magnesium titanium, copper, and other metal and alloy substrates. The ferrous metal substrates used in the practice of the present invention may include iron, steel, and alloys thereof. Non-limiting examples of useful steel materials include cold rolled steel, galvanized (zinc coated) steel, electrogalvanized steel, stainless steel, pickled steel, zinc-iron alloy such as GALVANNEAL, and combinations thereof. Combinations or composites of ferrous and non-ferrous metals can also be used. Aluminum alloys of the 1XXX, 2XXX, 3XXX, 4XXX, 5XXX, 6XXX, 7XXX, or 8XXX series as well as clad aluminum alloys and cast aluminum alloys of the A356, 1XX.X, 2XX.X, 3XX.X, 4XX.X, 5XX.X, 6XX.X, 7XX.X, or 8XX.X series also may be used as the substrate. Magnesium alloys of the AZ31B, AZ91C, AM60B, or EV31A series also may be used as the substrate. The substrate used in the present invention may also comprise titanium and/or titanium alloys of grades 1-36 including H grade variants. Other suitable non-ferrous metals include copper and magnesium, as well as alloys of these materials. Suitable metal substrates for use in the present invention include those that are used in the assembly of vehicular bodies (e.g., without limitation, door, body panel, trunk deck lid, roof panel, hood, roof and/or stringers, rivets, landing gear components, and/or skins used on an aircraft), a vehicular frame, vehicular parts, motorcycles, wheels, and industrial structures and components. As used herein, "vehicle" or variations thereof includes, but is not limited to, civilian, commercial and military aircraft, and/or land vehicles such as cars, motorcycles, and/or trucks. The metal substrate also may be in the form of, for example, a sheet of metal or a fabricated part. The substrate may comprise a fibrous material, a sheet, or a mesh, including comprising carbon fibers, glass fibers, and/or nylon. The substrate may comprise a composite material such as a plastic or a fiberglass composite. The substrate may be a fiberglass and/or carbon fiber composite. The compositions disclosed herein are particularly suitable for use in various industrial or transportation applications including automotive, light and heavy commercial vehicles, marine, or aerospace.

In examples, it has been surprisingly and unexpectedly discovered that treatment of at least a portion of a substrate surface with a system or method of the present invention (i.e., one of the deoxidizing compositions of the present invention, followed by treatment with one of the coating compositions described herein) result in a substrate having formed thereon a coating, film, or the like that may have a lap shear displacement at failure of at least 2.5 mm, such as at least 3.0 mm, such as at least 3.1 mm, and a lap shear strength of at least 30 MPa, such as at least 32 MPa, such as at least 35 MPa, wherein lap shear displacement and lap shear strength each are measured according to ASTM D1002-10 using 2024-T3 aluminum substrate of 1.6 mm thickness, as measured by an INSTRON 5567 machine in tensile mode with a pull rate of 1.3 mm per minute. Treatment of at least a portion of a substrate surface with a system or method of the present invention (i.e., one of the deoxidizing compositions of the present invention, followed by treatment with one of the coating compositions described herein) may increase lap shear displacement at failure and lap shear strength above what may be achieved when the coating composition is applied to a substrate surface that has been treated with a conventional deoxidizing composition.

It also has been surprisingly and unexpectedly discovered that treatment of at least a portion of a surface of a metal substrate with one of systems of the present invention (i.e., one of the deoxidizing compositions of the present invention, followed by treatment with one of the coating compositions described herein) eliminates the need for treating the substrate surface with a pretreatment composition, such as zinc phosphate-, hexavalent chromium-, or Group IVB metal-containing pretreatment compositions.

### Additive Manufacturing

The 2K compositions disclosed herein surprisingly may be used in any suitable additive manufacturing technology, such as extrusion, jetting, and binder jetting.

The present disclosure is directed to the production of structural articles, such as by way of non-limiting example, sound damping pads, using three-dimensional printing. A three-dimensional article may be produced by forming successive portions or layers of an article by depositing the composition of the present invention onto a substrate and thereafter depositing additional portions or layers of the composition over the underlying deposited portion or layer and/or adjacent the previously deposited portion or layer. Layers can be successively deposited adjacent to a previously deposited layer to build a printed article. First and second components of the composition can be mixed and then deposited or the first and second components of the composition can be deposited separately. When deposited separately, the first and second components can be deposited simultaneously, sequentially, or both simultaneously and sequentially.

By "portions of an article," when used with respect to additive manufacturing, is meant subunits of an article, such as layers of an article. The layers may be on successive horizontal parallel planes. The portions may be parallel planes of the deposited material or beads of the deposited material produced as discreet droplets or as a continuous stream of material. The first and second components may each be provided neat or may also include a solvent (organic and/or water) and/or other additives as described below. First and second components provided by the present disclosure may be substantially free of solvent. By substantially free is meant that the first and second components comprise less than 5 wt%, less than 4 wt%, less than 2 wt%, or less than 1 wt% of solvent, where wt% is based on the total weight of the first component or the second component, as the case may be. Similarly, the composition provided by the present disclosure may be substantially free of solvent, such as having less than 5 wt%, less than 4 wt%, less than 2 wt%, or less than 1 wt% of solvent, where wt% is based on the total weight of the composition.

The first and second components may be mixed together and subsequently deposited as a mixture of components that react to form portions of an article. For example, two components may be mixed together and deposited as a mixture of components that react to form a thermoset by delivery of at least two separate streams of the components into a mixer such as a static mixer and/or a dynamic mixer to produce a single stream that is then deposited. The components may be at least partially reacted by the time a composition comprising the reaction mixture is deposited. The deposited reaction mixture may react at least in part after deposition and may also react with previously deposited portions and/or subsequently deposited portions of the article such as underlying layers or overlying layers of the article.

Two or more components can be deposited using any suitable equipment. The selection of suitable deposition equipment depends on a number of factors including the deposition volume, the viscosity of the composition and the complexity of the part being fabricated. Each of the two or more components can be introduced into an independent pump and injected into a mixer to combine and mix the two components. A nozzle can be coupled to the mixer and the mixed composition can be pushed under pressure or extruded through the nozzle.

A pump can be, for example, a positive displacement pump, a syringe pump, a piston pump, or a progressive cavity pump. The two pumps delivering the two components can be placed in parallel or placed in series. A suitable pump can be capable of pushing a liquid or viscous liquid through a nozzle orifice. This process can also be referred to as extrusion. A component can be introduced into the mixer using two pumps in series.

For example, the first and second components can be deposited by dispensing materials through a disposable nozzle attached to a progressive cavity two-component dosing system such as a ViscoTec eco-DUO 450 precision dosing system, where the first and second components are mixed in-line. A two-component dosing system can comprise, for example, two progressive cavity pumps that separately dose reactants into a disposable static mixer dispenser or into a dynamic mixer. Other suitable pumps include positive displacement pumps, syringe pumps, piston pumps, and progressive cavity pumps. Upon dispensing, the materials of the first and second components form an extrudate which can be deposited onto a surface to provide an initial layer of material and successive layers on a base. The deposition system can be positioned orthogonal to the base, but also may be set at any suitable angle to form the extrudate such that the extrudate and deposition system form an obtuse angle with the extrudate being parallel to the base. The extrudate refers to the combined components, *i.e.,* a composition, that have been mixed, for example, in a static mixer or in a dynamic mixer. The extrudate can be shaped upon passing through a nozzle.

The base, the deposition system, or both the base and the deposition system may be moved to build up a three-dimensional article. The motion can be made in a predetermined manner, which may be accomplished using any suitable CAD/CAM method and apparatus such as robotics and/or computerized machine tool interfaces.

An extrudate may be dispensed continuously or intermittently to form an initial layer and successive layers. For intermittent deposition, a dosing system may interface with a relay switch to shut off the pumps, such as the progressive cavity pumps and stop the flow of reactive materials. Any suitable switch such as an electromechanical switch that can be conveniently controlled by any suitable CAD/CAM methodology can be used.

A deposition system can include an in-line static and/or dynamic mixer as well as separate pressurized pumping compartments to hold the at least two components and feed the materials into the static and/or dynamic mixer. A mixer such as an active mixer can comprise a variable speed central impeller having high shear blades within a conical nozzle. A range of conical nozzles may be used which have an exit orifice dimension, for example, from 0.2 mm to 50 mm, from 0.5 mm to 40 mm, from 1 mm to 30 mm, or from 5 mm to 20 mm.

A range of static and/or dynamic mixing nozzles may be used which have, for example, an exit orifice dimension from 0.6 mm to 2.5 mm, and a length from 30 mm to 150 mm. For example, an exit orifice diameter can be from 0.2 mm to 4.0 mm, from 0.4 mm to 3.0 mm, from 0.6 mm to 2.5 mm, from 0.8 mm to 2 mm, or from 1.0 mm to 1.6 mm. A static mixer and/or dynamic can have a length, for example, from 10 mm to 200 mm, from 20 mm to 175 mm, from 30 mm to 150 mm, or from 50 mm to 100 mm. A mixing nozzle can include a static and/or dynamic mixing section and a dispensing section coupled to the static and/or dynamic mixing section. The static and/or dynamic mixing section can be configured to combine and mix the first and second components. The dispensing section can be, for example, a straight tube having any of the above orifice diameters. The length of the dispensing section can be configured to provide a region in which the components can begin to react and build viscosity before being deposited on the article. The length of the dispensing section can be selected, for example, based on the speed of deposition, the rate of reaction of the first and second components, and the desired viscosity.

First and second components can have a residence time in the static and/or dynamic mixing nozzle, for example, from 0.25 seconds to 5 seconds, from 0.3 seconds to 4 seconds, from 0.5 seconds to 3 seconds, or from 1 seconds to 3 seconds. Other residence times can be used as appropriate based on the curing chemistries and curing rates.

In general, a suitable residence time is less than the gel time of the composition. A suitable gel time can be less than 10 min, less than 8 min, less than 6 min, less than 5 min, less than 4 min, less than 3 min, less than 2 min, or less than 1 min. A gel time of the composition can be, for example, from 0.5 min to 10 min, from 1 min to 7 min, from 2 min to 6 min, or from 3 min to 5 min.

Compositions provided by the present disclosure can have a volume flow rate, for example, from 0.1 mL/min to 20,000 mL/min, such as from 1 mL/min to 12,000 mL/min, from 5 mL/min to 8,000 mL/min, or from 10 mL/min to 6,000 mL min. The volume flow rate can depend, for example, on the viscosity of the composition, the extrusion pressure, the nozzle diameter, and the reaction rate of the first and second components.

A composition can be used at a print speed, for example, from 1 mm/sec to 400 mm/sec, such as from 5 mm/sec to 300 mm/sec, from 10 mm/sec to 200 mm/sec, or from 15 mm/sec to 150 mm/sec. The printed speed can depend, for example, on the viscosity of the composition, the extrusion pressure, the nozzle diameter, and the reaction rate of the components. The print speed refers to the speed at which a nozzle used to extrude a composition move with respect to a surface onto which the composition is being deposited.

A composition can have a gel time, for example, less than 5 minutes, less than 4 minutes, less than 3 minutes, less than 2 minutes, less than 1 minute, less than 45 seconds, less than 30 seconds, less than 15 seconds, or less than 5 seconds. A composition can have a gel time, for example, from 0.1 seconds to 5 minutes, from 0.2 seconds to 3 minutes, from 0.5 seconds to 2 minutes, from 1 second to 1 minute, or from 2 seconds to 40 seconds. Gel time is considered as the time following mixing when the composition is no longer stirrable by hand.

A static and/or dynamic mixing nozzle can be heated or cooled to control, for example, the rate of reaction between the first and second components and/or the viscosity of the first and second components. An orifice of a deposition nozzle can have any suitable shape and dimensions. A system can comprise multiple deposition nozzles. The nozzles can have a fixed orifice dimension and shape, or the nozzle orifice can be controllably adjusted. The mixer and/or the nozzle may be cooled to control an exotherm generated by the reaction of the first and second components.

Methods provided by the present disclosure include printing the composition on a fabricated part. Methods provided by the present disclosure include directly printing parts.

Using the methods provided by the present disclosure parts can be fabricated. The entire part can be formed from one of the compositions disclosed herein, one or more portions of a part can be formed from one of the compositions disclosed herein, one or more different portions of a part can be formed using the compositions disclosed herein, and/or one or surfaces of a part can be formed from a composition provided by the present disclosure. In addition, internal regions of a part can be formed from a composition provided by the present disclosure.

In examples, any of the coating compositions described above may be extruded to form an article. Any of the deoxidizing compositions described herein may be applied to at least a portion of a surface of the extruded article.

Whereas specific aspects of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the claims appended and any and all equivalents thereof.

Illustrating the invention are the following examples, which, however, are not to be considered as limiting the invention to their details. Unless otherwise indicated, all parts and percentages in the following examples, as well as throughout the specification, are by weight.

### EXAMPLES

A deoxidizing composition (DEOX-1) was prepared in a clean 5-gallon plastic bucket to which 18.2 liters of deionized water, 180.5 g fluorosilicic acid (23% solution), 80 g fluorozirconic acid (45% solution), 11.61 g potassium bifluoride, and 31.6 g of Chemfil Buffer (commercially available from PPG Industries, Inc.) were added.

In each of the Examples below, 2024-T3 aluminum alloy panels measuring 25.4 mm×101.6 mm×1.6 mm (supplied by Online Metals) were used to prepare lap shear specimens according to ASTM D1002-10. Each panel was rinsed with acetone, then was immersed in deionized water for 1 minute, then was immersed in DEOX-1 (heated to 100°F) for 1 minute. Each panel was immersed in deionized water for 1 minute and then was dried at 70°C for at least 10 minutes.

Next, one of Compositions I through XXXVI below was prepared as described below. Glass beads averaging 4.1 mil in diameter were mixed into the composition in an amount of 2% by weight based on total weight of the composition. Composition was applied to one end of a panel covering the full 25.4 mm width and ≥12.7 mm from one end. A second pretreated aluminum panel was then placed over the composition layer in an end-to-end fashion, resulting in a bond area of 25.4 mm×12.7 mm. Lap shear specimens were prepared at 50% relative humidity or lower. Lap joints were secured with metal clips and excess composition cleaned, leaving a 45° fillet. Lap joints were baked at 70°C for 60 minutes. The baked lap joint specimens were tested using an INSTRON model 5567 in tensile mode with 25.4 mm of aluminum substrate in each grip and at a pull rate of 1.3 mm per minute (in accordance with ASTM D1002-10).

### Example 1

Compositions I-III were prepared from the mixtures of ingredients shown in Table 1. All compositions were prepared at a molar ratio of epoxide functional groups from the epoxy-containing compound to amine-hydrogens from the diamine or polyamine containing a cyclic ring of 1:1 (E:AH). Epoxy resins and fillers were premixed, then the curing agent, accelerators, and spacer beads were added, mixed for at least 1 minute at 2350 rpm using a DAC Speedmixer, and then lap shear specimens (described above) were immediately prepared.

| **Table 1.** Compositions **I-III** | | | |
|---|---|---|---|
| Components | **I (comparative)** | **II** | **III (comparative)** |
| Kane Ace MX-135¹ | 15.25 | 15.25 | 15.25 |
| Epon 863² | 3.18 | 3.18 | 3.18 |
| Aerosil R202³ | 0.57 | 0.57 | 0.57 |
| Ancamine 1922A⁴ | 4.85 | | |
| m-xylylenediamine⁵ | | 3.00 | |
| Diethylenetriamine⁶ | | | 1.82 |
| Ancamine K54⁷ | 0.48 | 0.46 | 0.43 |
| Total | 24.33 | 22.46 | 21.25 |

| **Lap Joint Performance** | | | |
|---|---|---|---|
| Lap Shear Strength [MPa] | 35.3 ± 1.6 | 43.3 ± 0.9 | 31.9 ± 4.6 |
| Displacement at Failure [mm] | 2.60 ± 0.19 | 4.32 ± 0.25 | 2.20 ± 0.32 |
| ¹ Blend of bisphenol F epoxy resin and ~100 nm diameter core-shell styrene-butadiene rubber available from Kaneka Corporation (epoxy-containing compound with elastomeric particles) | | | |
| ² Liquid bisphenol F epoxy resin available from Hexion (epoxy-containing compound) | | | |
| ³ Hydrophobic fumed silica available from Evonik (filler) | | | |
| ⁴ Bis(3-aminopropyl)diethylene glycol ether available from Evonik (curing agent) | | | |
| ⁵ Available from Sigma-Aldrich (curing agent; diamine containing a cyclic ring) | | | |
| ⁶ Available from Acros Organics (curing agent) | | | |
| ⁷ 2,4,6-tris(N,N-dimethylaminomethyl)phenol available from Evonik (accelerator) | | | |

The data from Example 1 demonstrate that curing of an epoxy resin containing elastomeric particles with m-xylylenediamine (a diamine containing a cyclic ring) (Composition II) forms an adhesive with improved lap shear strength and displacement compared to other amine-containing curing agents (Compositions I and III).

### Example 2

Example 2 illustrates the effects of epoxy resin composition and core-shell elastomeric particle size and composition on lap joint performance.

Compositions IV-VIII were prepared from the mixtures of ingredients shown in Table 2. All compositions were prepared at an E:AH molar ratio of 1:1. Epoxy resins and fillers were premixed, then accelerators, curing agents, and spacer beads were added, mixed for at least 1 minute at 2350 rpm using a DAC Speedmixer, and then lap shear specimens were immediately prepared and tested in accordance with ASTM D1002-10 as described above.

| **Table 2.** Compositions **IV-VIII** | | | | | |
|---|---|---|---|---|---|
| Components | **IV** | **v** | **VI** | **VII** | **VIII** |
| Epon 863 | 19.84 | 4.49 | 4.46 | 9.71 | 4.48 |
| Kane Ace MX-135 | | 16.00 | | | |
| Kane Ace MX-136¹ | | | 16.00 | | |
| Kane Ace MX-267² | | | | 10.81 | |
| Kane Ace MX-965³ | | | | | 16.00 |
| Aerosil R 202 | 0.63 | 0.63 | 0.63 | 0.63 | 0.63 |
| m-Xylylenediamine | 4.03 | 3.38 | 3.41 | 3.35 | 3.39 |
| Ancamine K-54 | 0.50 | 0.50 | 0.50 | 0.50 | 0.50 |
| Total | 25.00 | 25.00 | 25.00 | 25.00 | 25.00 |

| **Lap Joint Performance** | | | | | |
|---|---|---|---|---|---|
| Lap Shear Strength [MPa] | 22.4 ± 2.4 | 43.1 ± 1.8 | 44.8 ± 1.8 | 41.5 ± 1.1 | 30.5 ± 3.3 |
| Displacement at Failure [mm] | 1.38 ± 0.14 | 3.34 ± 0.57 | 2.89 ± 0.19 | 3.00 ± 0.32 | 1.92 ± 0.22 |
| ¹ Blend of bisphenol F epoxy resin and ~100 nm diameter core-shell polybutadiene rubber available from Kaneka Corporation | | | | | |
| ² Blend of bisphenol F epoxy resin and ~200 nm diameter core-shell polybutadiene rubber available from Kaneka Corporation | | | | | |
| ³ Blend of bisphenol F epoxy resin and ~300 nm diameter core-shell polysiloxane rubber available from Kaneka Corporation | | | | | |

The data from Example 2 indicate that inclusion of elastomeric particles having an average particle diameter of less than 300 nm resulted in an adhesive having improved lap shear strength and displacement.

### Example 3

Example 3 illustrates the effect that including an accelerator in the coating composition has on lap shear properties.

Compositions IX-XV were prepared from the mixtures of ingredients shown in Table 3. All compositions were prepared at an E:AH molar ratio of 1:1. Epoxy resins and fillers were premixed, then accelerators, curing agents, and spacer beads were added, mixed for at least 1 minute at 2350 rpm using a DAC Speedmixer, and then lap shear specimens were immediately prepared and tested in accordance with ASTM D1002-10, as described above.

| **Table 3.** Compositions **IX-XV** | | | | | | | |
|---|---|---|---|---|---|---|---|
| Components | **IX** | **X** | **XI** | **XII** | **XIII** | **XIV** | **XV** |
| Kane Ace MX-135 | 15.25 | 15.25 | 15.25 | 15.25 | 15.25 | 15.25 | 15.25 |
| Epon 863 | 3.18 | 3.18 | 3.18 | 3.18 | 3.18 | 3.18 | 3.18 |
| Aerosil R202 | 0.57 | 0.57 | 0.57 | 0.57 | 0.57 | 0.57 | 0.57 |
| m-xvlvlenediamine | 3.00 | 3.00 | 3.00 | 3.00 | 3.00 | 3.00 | 3.00 |
| Ancamine K-54 | 0.46 | | | | | | |
| Diazabicylcoundecene¹ | | 0.46 | | | | | |
| 1-methylimidazole² | | | 0.46 | | | | |
| Triethanolamine³ | | | | 0.46 | | | |
| Tetrabutylammonium Bromide⁴ | | | | | 0.46 | | |
| Aminosalicylic Acid⁵ | | | | | | 0.46 | |
| DABCO⁶ | | | | | | | 0.46 |
| Total | 22.46 | 22.46 | 22.46 | 22.46 | 22.46 | 22.46 | 22.46 |

| **Lap Joint Performance** | | | | | | | |
|---|---|---|---|---|---|---|---|
| Lap Shear Strength [MPa] | 45.2 ± 0.8 | 44.0 ± 1.1 | 45.1 ± 0.8 | 21.1 ± 2.7 | 42.3 ± 1.3 | 29.5 ± 1.8 | 42.3 ± 0.1 |
| Displacement at Failure [mm] | 3.95 ± 0.47 | 3.14 ± 0.25 | 3.50 ± 0.28 | 1.17 ± 0.20 | 2.92 ± 0.21 | 1.66 ± 0.19 | 3.26 ± 0.42 |
| ¹ Amidine base available from Sigma-Aldrich (accelerator) | | | | | | | |
| ² Imidazole base available from Oakwood Products (accelerator) | | | | | | | |
| ³ Tertiary amine base available from Sigma-Aldrich (accelerator) | | | | | | | |
| ⁴ Ammonium salt available from Sigma-Aldrich (accelerator) | | | | | | | |
| ⁵ Multifunctional amine available from Sigma-Aldrich (accelerator); amine hydrogens omitted in calculated E:AH molar ratio | | | | | | | |
| ⁶ Tertiary amine base available from Sigma-Aldrich (accelerator) | | | | | | | |

The data from Example 3 indicate that accelerators may further improve lap joint strength and displacement.

### Example 4

Example 4 illustrates the effects of E:AH molar ratio and accelerator loading on lap joint performance.

Compositions XVI-XXIV were prepared from the mixtures of ingredients shown in Table 4. Each composition was prepared at the E:AH molar ratio shown in Table 4. Epoxy resins and fillers were premixed, then accelerators, curing agents, and spacer beads were added, mixed for at least 1 minute at 2350 rpm using a DAC Speedmixer, and then lap shear specimens were immediately prepared and tested in accordance with ASTM D1002-10, as described above.

| **Table 4**. Compositions **XVI-XXIV** | | | | | | | | | |
|---|---|---|---|---|---|---|---|---|---|
| Components | **XVI** | **XVII** | **XVIII** | **XIX** | **XX** | **XXI** | **XXII** | **XXIII** | **XXIV** |
| Kane Ace MX-135 | 15.25 | 15.25 | 15.25 | 15.25 | 15.25 | 15.25 | 15.25 | 15.25 | 15.25 |
| Epon 863 | 3.18 | 3.18 | 3.18 | 3.18 | 3.18 | 3.18 | 3.18 | 3.18 | 3.18 |
| Aerosil R202 | 0.57 | 0.57 | 0.57 | 0.57 | 0.57 | 0.57 | 0.57 | 0.57 | 0.57 |
| MXDA | 3.00 | 2.40 | 4.00 | 3.00 | 2.40 | 4.00 | 3.00 | 2.40 | 4.00 |
| Ancamine K54 | 0.23 | 0.22 | 0.24 | 0.46 | 0.44 | 0.46 | 0.92 | 0.89 | 0.95 |
| Total | 22.23 | 21.62 | 23.24 | 22.46 | 21.84 | 23.46 | 22.92 | 22.29 | 23.95 |
| E:AH molar Ratio | 1.0:1.0 | 1.25:1.0 | 0.75:1.0 | 1.0:1.0 | 1.25:1.0 | 0.75:1.0 | 1.0:1.0 | 1.25:1.0 | 0.75:1.0 |
| Wt% Ancamine K54 | 1.0% | 1.0% | 1.0% | 2.0% | 2.0% | 2.0% | 4.0% | 4.0% | 4.0% |

| **Lap Joint Performance** | | | | | | | | | |
|---|---|---|---|---|---|---|---|---|---|
| Lap Shear Strength [MPa] | 44.5 ± 0.7 | 43.1 ± 0.6 | 43.8 ± 2.0 | 45.3 ± 0.5 | 44.3 ± 1.7 | 46.8 ± 0.9 | 42.9 ± 1.3 | 40.4 ± 3.0 | 45.1 ± 2.0 |
| Displacement at Failure [mm] | 3.84 ± 0.32 | 3.33 ± 0.16 | 4.23 ± 0.46 | 4.19 ± 0.26 | 4.11 ± 0.53 | 4.88 ± 0.56 | 3.07 ± 0.22 | 2.74 ± 0.31 | 4.32 ± 0.84 |

The data from Example 4 demonstrate that E:AH molar ratios of 0.75:1.0 to 1.25:1.0 and accelerator loadings of 4 wt% or less give improved lap joint strength and displacement.

### Example 5

Lap joint specimens (prepared according to ASTM D1002-10 as described above) were prepared using Loctite EA 9309, Loctite EA 9320, or Loctite EA 9395 (each commercially available from Henkel), DP460NS (commercially available from 3M), and with Composition II (prepared as described above) under identical conditions. In order to maintain a bondline thickness, 4.1 mil glass beads were added to each composition at 2% by weight based on total weight of the composition. Lap joint specimens were baked at 70°C for 60 minutes. Testing was conducted according to ASTM D1002-10.

| | **Table 5**. Lap Joint Performance | | | | |
|---|---|---|---|---|---|
| Composition | Loctite EA9309 (comparative) | Loctite EA9320 (comparative) | Loctite EA9395 (comparative) | DP460NS (comparative) | **II** |
| Lap Shear Strength [MPa] | 33.0 ± 0.8 | 36.1 ± 3.2 | 27.4 ± 2.2 | 36.4 ± 0.7 | 44.4 ± 2.3 |
| Displacement at Failure [mm] | 2.10 ± 0.05 | 2.31 ± 0.19 | 1.73 ± 0.13 | 1.80 ± 0.05 | 4.12 ± 0.60 |

The data from Example 5 demonstrate that Composition II, which is an epoxide-functional composition containing elastomeric particles cured with m-xylylenediamine and accelerator, had improved lap joint strength and displacement compared to commercially available adhesive compositions that do not contain a combination of core-shell rubber particles and diamine containing a cyclic ring or a polyamine containing a cyclic ring.

### Example 6

Example 6 illustrates the effects of using an oligomer of m-xylylenediamine and epichlorohydrin to cure the adhesive composition.

Compositions XXV-XXVI were prepared from the mixtures of ingredients shown in Table 6. Each composition was prepared at an E:AH molar ratio of 1:1. Epoxy resins and fillers were premixed, then accelerators, curing agents, and spacer beads were added, mixed for at least 1 minute at 2350 rpm using a DAC Speedmixer, and then lap shear specimens were immediately prepared on ChemKleen 490MX or DEOX-1 treated aluminum in accordance with ASTM D1002-10and tested in accordance with ASTM D1002-10, as described above. Aluminum panels were treated with ChemKleen 490MX (commercially available from PPG) as follows: rinsed panels with acetone, immersed in deionized water for 2 minutes, immersed in the ChemKleen 490MX (heated to 120°F) for 2 minutes, immersed in deionized water for 2 minutes, and dried at 70°C for 10 minutes.

| **Table 6.** Compositions **XXV-XXVI** | | |
|---|---|---|
| Components | **XXV** | **XXVI** |
| Kane Ace MX-135 | 9.16 | 9.16 |
| Epon 863 | 9.16 | 9.16 |
| Aerosil R202 | 0.65 | 0.65 |
| m-xylylenediamine | 3.26 | |
| Gaskamine 328¹ | | 5.27 |
| Ancamine K54 | 0.46 | 0.50 |
| Total | 22.72 | 24.77 |

| **Lap Joint Performance** | | |
|---|---|---|
| Lap Shear Strength [MPa], ChemKleen | 39.0 ± 3.2 | 37.5 ± 0.8 |
| Displacement at Failure [mm], ChemKleen | 2.66 ± 0.33 | 2.35 ± 0.11 |
| Lap Shear Strength [MPa], DEOX-1 | 45.3 ± 0.7 | 43.1 ± 2.6 |
| Displacement at Failure [mm], DEOX-1 | 4.02 ± 0.40 | 3.43 ± 0.64 |
| | | |
| | | |
| ¹ Oligomer of m-xylylenediamine and epichlorohydrin available from Mitsubishi Gas Chemical (oligomeric polyamine amine containing a cyclic ring) | | |

The data from Example 6 show that an oligomeric polyamine containing a cyclic ring performs substantially the same as a diamine containing a cyclic ring. Furthermore, the data demonstrate the improved lap shear strength and displacement obtained when the surface was treated with DEOX-1.

### Example 7

Compositions XXVII-XXXIV were prepared from the mixtures of ingredients shown in Table 7. All compositions were prepared at an E:AH molar ratio of 1:1. Epoxy resins and fillers were premixed, then curing agents, accelerator, and spacer beads were added, mixed for at least 1 minute at 2350 rpm using a DAC Speedmixer, and then lap shear specimens (described above) were immediately prepared. Samples were baked at 70 °C for 60 minutes, and some samples were additionally baked at 150 °C for 180 minutes.

| | | | | | | | | |
|---|---|---|---|---|---|---|---|---|
| **Table 7.** Compositions **XXVII-XXXIV** | | | | | | | | |

| Components | **XXVII** | **XXVIII** | **XXIX** | **XXX (Comp)** | **XXXI** | **XXXII (Comp)** | **XXXIII** | **XXXIV** |
|---|---|---|---|---|---|---|---|---|
| Kane Ace MX-135 | 13.50 | 8.10 | 13.50 | 13.50 | 13.50 | 13.50 | 13.50 | 13.50 |
| Epon 863 | 4.50 | 2.70 | 4.39 | 4.88 | 3.90 | 4.28 | 3.94 | 3.76 |
| Aerosil R202 | 0.44 | 0.26 | 0.44 | 0.44 | 0.44 | 0.44 | 0.44 | 0.44 |
| m-xylylenediamine | 3.00 | | | | | | | |
| o-xylylenediamine¹ | | 1.80 | | | | | | |
| 1,3-bis(aminomethyl)cyclohexane² | | | 3.11 | | | | | |
| 1,5-diamino-2-methylpentane³ | | | | 2.62 | | | | |
| Isophorone diamine⁴ | | | | | 3.60 | | | |
| Jeffamine EDR-148⁵ | | | | | | 3.22 | | |
| Ancamine 1482⁶ | | | | | | | 3.56 | |
| Ethacure 100-LC⁷ | | | | | | | | 3.74 |
| Ancamine K-54 | 0.44 | 0.26 | 0.44 | 0.44 | 0.44 | 0.44 | 0.44 | 0.44 |

| **Lap Joint Performance** | | | | | | | | |
|---|---|---|---|---|---|---|---|---|
| Lap Shear Strength [MPa], 70 °C cure | 48.6 ±1.5 | 46.5 ± 1.5 | 46. 3 ± 1.2 | 44.3 ± 1.3 | 33.2 ± 2.3 | 42.7 ± 0.7 | 35.9 ± 5.4 | 16.4 ± 5.5 |
| Displacement at Failure [mm], 70 °C cure | 4.04 ± 0.67 | 3.30 ± 0.68 | 3.11 ± 0.44 | 2.58 ± 0.32 | 1.39 ± 0.11 | 2.27 ± 0.14 | 1.60 ± 0.30 | 0.72 ± 0.32 |
| Lap Shear Strength [MPa], 150 °C cure | 46.5 ±1.0 | 46.4 ± 0.6 | 44.8 ± 0.9 | 42.7 ± 1.5 | 45.2 ± 0.7 | 40.8 ± 0.7 | 45.5 ± 1.5 | 44.5 ± 1.5 |
| Displacement at Failure [mm], 150 °C cure | 4.43 ±0.53 | 4.51 ± 0.23 | 3.68 ± 0.60 | 2.79 ± 0.46 | 3.61 ± 0.31 | 2.32 ± 0.10 | 3.96 ± 0.78 | 3.51 ± 0.52 |
| ¹⁻⁴ Available from Sigma-Aldrich | | | | | | | | |
| ⁵ Bis(3-aminopropyl)diethylene glycol ether available from Evonik | | | | | | | | |
| ⁶ Liquid eutectic mixture of cyclic polyamines available from Evonik | | | | | | | | |
| ⁷ Mixture of isomers of diethyltoluenediamine available from Albemarle | | | | | | | | |

The data from Example 7 demonstrate that curing of an epoxy resin containing elastomeric particles with a diamine containing a cyclic structure forms an adhesive with improved lap shear strength and displacement compared to other amine-containing curing agents (Compositions XXX and XXXII).

### Example 8

An amine functional adduct containing a cyclic ring was prepared using the components in Table 8 below in the amounts indicated. An appropriately sized round bottom flask was first equipped with an addition funnel and a stirrer. The flask was charged with m-xylylenediamine and blanketed with a nitrogen atmosphere. Epon 863 was charged into the addition funnel and added dropwise into the flask over a period of 30 minutes while stirring, resulting the heating of the reaction mixture to 100 °C. The resulting mixture was subsequently heated to 70 °C for 5 hours, then allowed to stand at room temperature overnight. Thin layer chromatography analysis indicated complete conversion of the epoxy. The reaction mixture was heated to 70 °C and poured into a suitable container. The resulting amine functional adduct was used in adhesive compositions as shown in Example 9.

| **Table 8.** Composition **XXXV** | |
|---|---|
| **Component** | **XXXV** |
| m-xylylenediamine | 167.1 |
| Epon 863 | 83.0 |

### Example 9

Compositions XXXVI and XXXVII were prepared from the mixtures of ingredients shown in Table 9. All compositions were prepared at an E:AH molar ratio of 1:1, after assuming each primary amine will react once with each cyclic carbonate functional group. Epoxy resins, cyclic carbonate monomer, and fillers were premixed, then curing agents, accelerators and spacer beads were added, mixed for at least 1 minute at 2350 rpm using a DAC Speedmixer, and then lap shear specimens (described above) were immediately prepared, except that panels were either immersed in DEOX-1 or were immersed in CHEMDEOX 395 (commercially available from PPG Industries, Inc. and prepared according to manufacturer's instructions).

| **Table** 9. Compositions **XXXVI-XXXVII** | | |
|---|---|---|
| Components | **XXXVI** | **XXXVII** |
| Kane Ace MX-135 | 12.08 | 15.25 |
| Epon 863 | 2.52 | 3.18 |
| Jeffsol GC¹ | 1.04 | |
| Aerosil R202 | 0.45 | 0.57 |
| m-xylylenediamine | 3.00 | |
| Composition **XXXV** | | 5.02 |
| Ancamine K-54 | 0.39 | 0.48 |

| **Lap Joint Performance** | | |
|---|---|---|
| Lap Shear Strength [MPa], treated with ChemDeox 395 | 45.3 ± 2.6 | 44.7 ± 1.8 |
| Displacement at Failure [mm], treated with ChemDeox 395 | 3.77 ± 0.99 | 3.44 ± 0.49 |
| Lap Shear Strength [MPa], treated with DEOX-1 | 47.8 ± 0.8 | 45.3 ± 1.0 |
| Displacement at Failure [mm], treated with DEOX-1 | 4.96 ± 0.59 | 3.61 ± 0.31 |
| 1 Glycerine carbonate available from Huntsman Corporation | | |

The data from Example 9 demonstrate the improved lap shear strength and displacement obtainable in a composition modified with a cyclic carbonate-functional molecule or in a composition cured with an oligomeric amine reaction product. The data further demonstrate the further improved performance obtainable when panels are treated with DEOX-1.

## Claims

1. A system for treating a substrate, comprising:
a deoxidizing composition comprising a Group IVA metal and/or a Group IVB metal and free fluoride, wherein the deoxidizing composition has a pH of 1.0 to 3.0; and
a coating composition comprising:
a first component comprising an epoxy-containing compound;
a second component that chemically reacts with the epoxy-containing compound, the second component comprising a diamine comprising a cyclic ring and/or a polyamine comprising a cyclic ring; and
elastomeric particles,
wherein the cyclic ring of the diamine and/or the polyamine has at least one carbon positioned between the amino functional groups and the cyclic ring structure; and/or
wherein at least 50% by weight of the elastomeric particles comprise a styrene butadiene core based on total weight of the elastomeric particles.

2. The system of Claim 1, wherein the Group IVA metal is present in the deoxidizing composition in an amount of 10 ppm to 1000 ppm based on total weight of the deoxidizing composition; and/or
wherein the Group IVB metal is present in the deoxidizing composition in an amount of 200 ppm to 5000 ppm based on total weight of the deoxidizing composition; and/or
wherein the deoxidizing composition further comprises a Group IA metal, a Group VIB metal, an electropositive metal, or combinations thereof.

3. The system of any of the preceding Claims, wherein the deoxidizing composition further comprises a homopolymer or copolymer comprising a phosphorous-containing monomeric subunit m1 and optionally a non-phosphorous-containing monomeric subunit m2 wherein preferably the monomeric subunit m1 is present in the homopolymer or copolymer in an amount of 5 molar percent 100 molar percent based on total homopolymer or copolymer molarity; and/or the monomeric subunit m2 is present in the homopolymer or copolymer in an amount of no more than 95 molar percent based on total homopolymer or copolymer molarity; and/or the homopolymer or copolymer is present in the deoxidizing composition in an amount of 100 ppm to 3000 ppm based on total weight of the deoxidizing composition.

4. The system of any of the preceding Claims, wherein the diamine comprising the cyclic ring and/or the polyamine comprising the cyclic ring is present in an amount sufficient to provide a molar ratio of epoxide functional groups from the epoxy-containing compound to amine-hydrogens from the diamine and/or polyamine of 0.5:1.0 to 1.5:1.0.

5. The system of any of the preceding Claims, wherein the elastomeric particles comprise a core-shell structure; and/or wherein the second component of the coating composition further comprises an accelerator, wherein the accelerator preferably comprises a tris-(dimethylaminomethyl) phenol and/or a guanidine.

6. The system of any of the preceding Claims, wherein the coating composition comprises a filler material in an amount of no more than 25 percent by weight or or no more than 10 percent by weight based on total weight of the composition; and/or
wherein the coating composition further comprises a cyclic carbonate-functional molecule.

7. The system of any of the preceding Claims, wherein the coating composition comprises an adhesive composition or a sealant composition.

8. The system of any of the preceding Claims, further comprising a cleaner composition.

9. A substrate, a part or an article treated with the system of any of Claims 1 to 8.

10. A vehicle or a protective clothing comprising the substrate of Claim 9.

11. The substrate of Claim 9, the vehicle or protective clothing of Claim 10, the part and/or the article of Claim 9, wherein the composition, in an at least partially cured state, has a lap shear displacement of at least 2.5 mm at failure and a lap shear strength of at least 30.0 MPa, wherein the lap shear displacement and the lap shear strength each are measured according to ASTM D1002-10 using 2024-T3 aluminum substrate of 1.6 mm thickness, as measured by an INSTRON 5567 machine in tensile mode with a pull rate of 1.3 mm per minute.

12. A method for treating a substrate, comprising: contacting at least a portion of a surface of the substrate with the deoxidizing composition of any one of Claims 1 to 8; and contacting at least a portion of the surface with the coating composition of any of Claims 1 to 8.

13. The method of Claim 12, further comprising
treating the substrate with a composition comprising wax; and/or further comprising contacting at least a portion of the substrate with a cleaning composition, and/or
at least partially curing the composition by applying an external energy source to the composition comprising exposing the composition to a temperature of at least 50°C, and optionally further comprising a second applying an external energy source to the composition comprising exposing the composition to a temperature of at least 120°C; and/or wherein the substrate is not contacted with a pretreatment composition following the contacting with the deoxidizing composition and prior to the contacting with the coating composition.

14. A method of treating an extruded article with the system of any of Claims 1 to 8 comprising:
extruding the composition of any of Claims 1 to 8; and
applying the deoxidizing composition of any of Claims 1 to 8 to at least a portion of a surface of the article, wherein the extruding preferably comprises three-dimensional printing.

15. The article formed by the method of Claim 14.

## Patentansprüche

1. Ein System zur Behandlung eines Substrats umfassend:
eine desoxidierende Zusammensetzung umfassend ein Gruppe-IVA-Metall und/oder ein Gruppe-IVB-Metall und freies Fluorid, wobei die desoxidierende Zusammensetzung einen pH von 1,0 bis 3,0 aufweist; und
eine Beschichtungszusammensetzung umfassend:
einen ersten Bestandteil, umfassend eine epoxyhaltige Verbindung;
einen zweiten Bestandteil, der chemisch mit der epoxyhaltigen Verbindung reagiert, wobei der zweite Bestandteil ein Diamin umfassend einen cyclischen Ring und/oder ein Polyamin umfassend einen cyclischen Ring umfasst; und
Elastomerteilchen,
wobei der cyclische Ring des Diamins und/oder des Polyamins mindestens ein Kohlenstoffatom, angeordnet zwischen den aminofunktionellen Gruppen und der cyclischen Ringstruktur aufweist; und/oder
wobei mindestens 50 Gew.-% der Elastomerteilchen einen Styrolbutadienkern umfassen, bezogen auf das Gesamtgewicht der Elastomerteilchen.

2. Das System gemäß Anspruch 1, wobei das Gruppe-IVA-Metall in der desoxidierenden Zusammensetzung in einer Menge von 10 ppm bis 1000 ppm, bezogen auf das Gesamtgewicht der desoxidierenden Zusammensetzung, vorhanden ist; und/oder
wobei das Gruppe-IVB-Metall in der desoxidierenden Zusammensetzung in einer Menge von 200 ppm bis 5000 ppm, bezogen auf das Gesamtgewicht der desoxidierenden Zusammensetzung, vorhanden ist; und/oder
wobei die desoxidierende Zusammensetzung des Weiteren ein Gruppe-IA-Metall, ein Gruppe-VIB-Metall, ein elektropositives Metall oder Kombinationen derselben umfasst.

3. Das System gemäß irgendeinem der vorhergehenden Ansprüche, wobei die desoxidierende Zusammensetzung des Weiteren ein Homopolymer oder Copolymer, umfassend eine phosphorhaltige monomere Untereinheit m1 und wahlweise eine nicht-phosphorhaltige monomere Untereinheit m2 mfasst,
wobei vorzugsweise
die monomere Untereinheit m1 in dem Homopolymer oder Copolymer in einer Menge von 5 Mol-% bis 100 Mol-%, bezogen auf die Gesamtmolarität des Homopolymers oder Copolymers, vorhanden ist; und/oder
die monomere Untereinheit m2 in dem Homopolymer oder Copolymer in einer Menge von nicht mehr als 95 Mol-%, bezogen auf die Gesamtmolarität des Homopolymers oder Copolymers, vorhanden ist;
und/oder
das Homopolymer oder Copolymer in der desoxidierenden Zusammensetzung in einer Menge von 100 ppm bis 3000 ppm, bezogen auf das Gesamtgewicht der desoxidierenden Zusammensetzung, vorhanden ist.

4. Das System gemäß irgendeinem der vorhergehenden Ansprüche, wobei das Diamin umfassend den cyclischen Ring und/oder das Polyamin umfassend den cyclischen Ring in einer Menge vorhanden ist, die hinreichend ist, um ein molares Verhältnis von epoxidfunktionellen Gruppen aus der epoxyhaltigen Verbindung zu Aminwasserstoffen aus dem Diamin und/oder Polyamin von 0,5:1,0 bis 1,5:1,0 bereitzustellen.

5. Das System gemäß irgendeinem der vorhergehenden Ansprüche, wobei die Elastomerteilchen eine Kern-Schale-Struktur umfassen; und/oder wobei der zweite Bestandteil der Beschichtungszusammensetzung des Weiteren einen Beschleuniger enthält, wobei der Beschleuniger vorzugsweise ein Tris(dimethylaminomethyl)phenol und/oder ein Guanidin umfasst.

6. Das System gemäß irgendeinem der vorhergehenden Ansprüche, wobei die Beschichtungszusammensetzung ein Füllstoffmaterial in einer Menge von nicht mehr als 25 Gewichtsprozent oder nicht mehr als 10 Gewichtsprozent, bezogen auf das Gesamtgewicht der Zusammensetzung, enthält; und/oder
wobei die Beschichtungszusammensetzung des Weiteren ein cyclisches Carbonat-funktionelles Molekül umfasst.

7. Das System gemäß irgendeinem der vorhergehenden Ansprüche, wobei die Beschichtungszusammensetzung eine Haftmittelzusammensetzung oder eine Dichtmittelzusammensetzung umfasst.

8. Das System gemäß irgendeinem der vorhergehenden Ansprüche, des Weiteren umfassend eine Reinigerzusammensetzung.

9. Ein Substrat, ein Teil oder ein Gegenstand, behandelt mit dem System gemäß irgendeinem der Ansprüche 1 bis 8.

10. Ein Fahrzeug oder eine Schutzbekleidung umfassend das Substrat gemäß Anspruch 9.

11. Das Substrat gemäß Anspruch 9, das Fahrzeug oder die Schutzbekleidung gemäß Anspruch 10, das Teil und/oder der Gegenstand gemäß Anspruch 9, wobei die Zusammensetzung, in einem zumindest teilweise gehärteten Zustand, eine Zugscherverschiebung von mindestens 2,5 mm bei Versagen und eine Zugscherfestigkeit von mindestens 30,0 MPa aufweist, wobei die Zugscherverschiebung und die Zugscherfestigkeit jeweils gemäß ASTM D1002-10 unter Verwendung eines 2024-T3 Aluminiumsubstrats von 1,6 mm Dicke bestimmt werden, wie mit einer INSTRON 5567 Maschine im Zugmodus mit einer Zuggeschwindigkeit von 1,3 mm pro Minute bestimmt.

12. Ein Verfahren zur Behandlung eines Substrats, umfassend: In-Kontakt-Bringen mindestens eines Teils einer Oberfläche des Substrats mit der desoxidierenden Zusammensetzung gemäß irgendeinem der Ansprüche 1 bis 8 und In-Kontakt-Bringen mindestens eines Teils der Oberfläche mit der Beschichtungszusammensetzung gemäß irgendeinem der Ansprüche 1 bis 8.

13. Das Verfahren gemäß Anspruch 12, des Weiteren umfassend:
Behandeln des Substrats mit einer Zusammensetzung umfassend Wachs; und/oder
des Weiteren umfassend In-Kontakt-Bringen mindestens eines Teils des Substrats mit einer Reinigungszusammensetzung; und/oder zumindest teilweises Härten der Zusammensetzung durch Anwenden einer externen Energiequelle auf die Zusammensetzung umfassend ein Aussetzen der Zusammensetzung gegenüber einer Temperatur von mindestens 50 °C und wahlweise des Weiteren umfassend ein zweites Anwenden einer externen Energiequelle auf die Zusammensetzung umfassend ein Aussetzen der Zusammensetzung gegenüber einer Temperatur von mindestens 120 °C; und/oder
wobei das Substrat nicht mit einer Vorbehandlungszusammensetzung nach dem In-Kontakt-Bringen mit der desoxidierenden Zusammensetzung und vor dem In-Kontakt-Bringen mit der Beschichtungszusammensetzung in Kontakt gebracht wird.

14. Ein Verfahren zum Behandeln eines extrudierten Gegenstands mit dem System gemäß irgendeinem der Ansprüche 1 bis 8 umfassend:
Extrudieren der Zusammensetzung gemäß irgendeinem der Ansprüche 1 bis 8; und
Aufbringen der desoxidierenden Zusammensetzung gemäß irgendeinem der Ansprüche 1 bis 8 auf mindestens einen Teil einer Oberfläche des Gegenstands, wobei das Extrudieren vorzugsweise ein dreidimensionales Drucken umfasst.

15. Der Gegenstand gebildet durch das Verfahren gemäß Anspruch 14.

## Revendications

1. Système de traitement d'un substrat, comprenant :
- une composition de désoxydation, comprenant un métal du Groupe IVA et/ou un métal du Groupe IVB et des ions fluorure libres, laquelle composition de désoxydation présente un pH de 1,0 à 3,0,
- et une composition de revêtement, comprenant :
- un premier composant comprenant un composé à groupe époxy,
- un deuxième composant qui réagit chimiquement avec le composé à groupe époxy, lequel deuxième composant comprend une diamine comportant un cycle et/ou une polyamine comportant un cycle,
- et des particules d'élastomère,
étant entendu que le cycle de la diamine et/ou de la polyamine comporte au moins un atome de carbone placé entre les groupes fonctionnels amino et la structure cyclique,
et/ou qu'au moins 50 % en poids des particules d'élastomère comprennent un cœur de styrène-butadiène, par rapport au poids total des particules d'élastomère.

2. Système conforme à la revendication 1, dans lequel
- dans la composition de désoxydation, le métal du Groupe IVA se trouve présent en une proportion de 10 ppm à 1000 ppm, par rapport au poids total de la composition de désoxydation,
- dans la composition de désoxydation, le métal du Groupe IVB se trouve présent en une proportion de 200 ppm à 5000 ppm, par rapport au poids total de la composition de désoxydation,
- et/ou la composition de désoxydation comprend en outre un métal du Groupe IA, un métal du Groupe VIB, un métal électropositif, ou une combinaison de tels métaux.

3. Système conforme à l'une des revendications précédentes, dans lequel la composition de désoxydation comprend en outre un homopolymère ou copolymère comprenant un sous-motif monomère phosphoré m1, et en option, un sous-motif monomère non-phosphoré m2, étant entendu que le sous-motif monomère m1 se trouve présent, dans l'homopolymère ou le copolymère, en une proportion de 5 % en moles à 100 % en moles, par rapport au nombre total de moles de l'homopolymère ou du copolymère, et/ou que le sous-motif monomère m2 se trouve présent, dans l'homopolymère ou le copolymère, en une proportion ne dépassant pas 95 % en moles, par rapport au nombre total de moles de l'homopolymère ou du copolymère, et/ou que, dans la composition de désoxydation, l'homopolymère ou le copolymère se trouve présent en une proportion de 100 ppm à 3000 ppm, par rapport au poids total de la composition de désoxydation.

4. Système conforme à l'une des revendications précédentes, dans lequel la diamine comportant un cycle et/ou la polyamine comportant un cycle se trouve(nt) présente(s) en une quantité suffisante pour que le rapport molaire des groupes fonctionnels époxy provenant du composé à groupe époxy aux atomes d'hydrogène des groupes amino fournis par la diamine et/ou la polyamine vaille de 0,5/1,0 à 1,5/1,0.

5. Système conforme à l'une des revendications précédentes, dans lequel les particules d'élastomère comprennent une structure de type cœur-coque, et/ou dans lequel le deuxième composant de la composition de revêtement comprend en outre un accélérateur, lequel accélérateur comprend de préférence un tris(diméthylamino-méthyl)-phénol et/ou une guanidine.

6. Système conforme à l'une des revendications précédentes, dans lequel la composition de revêtement comprend une charge, en une proportion ne dépassant pas 25 % en poids, ou ne dépassant pas 10 % en poids, par rapport au poids total de la composition,
et/ou dans lequel la composition de revêtement comprend en outre une molécule cyclique à groupe fonctionnel carbonate.

7. Système conforme à l'une des revendications précédentes, dans lequel la composition de revêtement englobe une composition d'adhésif ou une composition d'agent d'étanchéité.

8. Système conforme à l'une des revendications précédentes, qui comprend en outre une composition d'agent de nettoyage.

9. Substrat, pièce ou article traité avec un système conforme à l'une des revendications 1 à 8.

10. Véhicule ou vêtement de protection comprenant un substrat conforme à la revendication 9.

11. Substrat conforme à la revendication 9, véhicule ou vêtement de protection conforme à la revendication 10, pièce et/ou article conforme à la revendication 9, dans lesquels la composition, dans un état au moins partiellement durci, présente un déplacement par cisaillement en recouvrement d'au moins 2,5 mm à la rupture et une résistance au cisaillement en recouvrement d'au moins 30,0 MPa, étant entendu que le déplacement par cisaillement en recouvrement et la résistance au cisaillement en recouvrement sont mesurés selon la norme ASTM D1002-10 sur un substrat en aluminium 2024-T3 de 1,6 mm d'épaisseur, au moyen d'une machine INSTRON 5567 en mode traction, avec une vitesse de traction de 1,3 mm par minute.

12. Procédé de traitement d'un substrat, comprenant le fait de mettre au moins une partie d'une surface du substrat en contact avec une composition de désoxydation conforme à l'une des revendications 1 à 8, et le fait de mettre au moins une partie de cette surface en contact avec une composition de revêtement conforme à l'une des revendications 1 à 8.

13. Procédé conforme à la revendication 12, qui comporte en outre
- le fait de traiter le substrat avec une composition comprenant une cire,
- et/ou le fait de mettre au moins une partie du substrat en contact avec une composition de nettoyage,
- et/ou le fait de faire durcir la composition, au moins partiellement, par application à la composition d'une source d'énergie extérieure, ce qui comporte le fait d'exposer la composition à une température d'au moins 50 °C, et comporte en outre, en option, une deuxième application d'une source d'énergie extérieure à la composition, ce qui comporte le fait d'exposer la composition à une température d'au moins 120 °C,
et/ou dans lequel le substrat n'est pas mis en contact avec une composition de prétraitement après avoir été mis en contact avec la composition de désoxydation et avant d'être mis en contact avec la composition de revêtement.

14. Procédé de traitement d'un article extrudé avec un système conforme à l'une des revendications 1 à 8, qui comporte
- le fait d'extruder une composition conforme à l'une des revendications 1 à 8,
- et le fait d'appliquer une composition de désoxydation conforme à l'une des revendications 1 à 8 sur au moins une partie d'une surface de l'article,
étant entendu que l'opération d'extrusion comprend de préférence une opération d'impression en trois dimensions.

15. Article formé par un procédé conforme à la revendication 14.
